# EUROPÄISCHE PATENTANMELDUNG

(11) **EP 1 126 442 A1**
(43) Veröffentlichungstag der Anmeldung: **22.08.2001**
(21) Anmeldenummer: 01102649.9
(22) Anmeldetag: 07.02.2001
(51) Int. Cl.: G11B 5/702, C08G 18/08

(54) **Bindemittelzusammensetzung für ein magnetisches Aufzeichnungsmedium**

(30) Priorität: 09.02.2000 DE 10005649
(71) Anmelder: EMTEC Magnetics GmbH, 67059 Ludwigshafen (DE)
(72) Erfinder: Hees, Ulrike, Dr., 68167 Mannheim (DE); Räther, Benedikt, Dr., 67117 Limburgerhof (DE); Kress, Ria, Dr., 67063 Ludwigshafen (DE); Kohl, Albert, 67229 Laumersheim (DE); Blum, Rainer, 67069 Ludwigshafen (DE)

(57) **Zusammenfassung**

Die Erfindung betrifft eine Bindemittelzusammensetzung für ein magnetisches Aufzeichnungsmedium, die mindestens ein Polyurethan mit einer Struktureinheit gemäß der allgemeinen Formel I 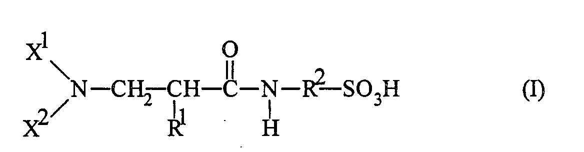 oder ein Salz davon, sowie ein magnetisches oder magnetisierbares Pigment aufweist.

## Beschreibung

Die vorliegende Erfindung betrifft eine Bindemittelzusammensetzung, enthaltend ein Polyurethan mit einer Struktureinheit gemäß der allgemeinen Formel I 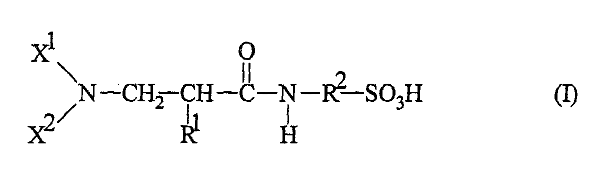 worin R¹ für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R² für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, X¹ und X² jeweils unabhängig voneinander für einen mindestens zwei C-Atome umfassenden, gegebenenfalls substituierten Rest stehen, wobei mindestens einer der Reste X¹ und X² durch Reaktion einer OH-, NH₂,-, NHR³ oder SH-Gruppe in das Polyurethan eingebunden ist, oder ein Salz davon, und mindestens ein magnetisches oder magnetisierbares Pigment.

Magnetische Aufzeichnungsmedien nehmen im Rahmen der dauerhaften Speicherung von Informationen einen breiten Raum ein. Üblicherweise besteht ein magnetisches Aufzeichnungsmedium aus einem nichtmagnetischen Trägermaterial und mindestens einer darauf haftfest aufgebrachten, magnetisierbaren Schicht auf der Basis von polymeren Bindemitteln und darin dispergierten, magnetischen Pigmenten. Aufgrund des immer weiter steigenden Speicherbedarfs für Informationen und der damit verbundenen Steigerung der Informationsdichte auf einem bestimmten Speichermedium werden an magnetische Aufzeichnungsmedien bezüglich Qualität der Aufzeichnung und der Wiedergabe sowie an die Alterungsbeständigkeit immer höhere Anforderungen gestellt. Um diesen Anforderungen gerecht zu werden, kommt dem polymeren Bindemittel in dem die magnetischen Pigmente dispergiert sind, eine *zunehmende Bedeutung zu. Angestrebt wird die Verbesserung der Stabilität der magnetischen Dispersion, die Vermeidung der Entstehung von Fehlern auf der Magnetschicht sowie zur Verbesserung der magnetischen Eigenschaften, insbesondere der Remanenz, eine erhöhte Packungsdichte der magnetischen Pigmente in der Magnetschicht, was beispielsweise durch Verringerung des Bindemittelanteils verbunden mit einer Erhöhung des Pigmentanteils in dieser Schicht erreichbar ist.

Die genannten Maßnahmen erschweren jedoch sowohl die Aufteilung der Pigmente im Dispergierprozeß als auch das Erreichen einer guten Dispersionsstabilität. Zudem müssen die magnetischen Schichten sehr flexibel sein, eine hohe Elastizität aufweisen und eine hohe Reißfestigkeit besitzen. Außerdem wird zur Vermeidung von Pegeleinbrüchen zudem zunehmend eine Verringerung der Reibungswerte sowie eine Erhöhung der Abrieb- und Verschleißfestigkeit der magnetischen Schicht gefordert. Diese mechanischen Eigenschaften müssen auch bei hoher Temperatur sowie hoher Luftfeuchtigkeit gewährleistet sein.

Viele bislang aus dem Stand der Technik bekannten Bindemittel sind jedoch nicht dazu in der Lage diese Anforderungen zu erfüllen. In vielen Fällen wird die Benetzung und Dispergierung der Pigmente, insbesondere bei sehr feinteiligen magnetischen Pigmenten, ungünstig beeinflußt. Dabei werden eventuelle Versinterungen beim Dispergierprozeß nicht genügend verteilt oder eine Reagglomeration der Pigmentteilchen nicht ausreichend verhindert, was zu schlechten magnetischen Werten des Aufzeichnungsmediums führt. Aus diesem Grunde wurden in der Vergangenheit der Dispersion zur Erleichterung des Dispergiervorgangs häufig niedermolekulare Dispergiermittel in kleineren Mengen zugefügt. Solche niedermolekularen Dispergiermittel weisen jedoch Nachteile auf. So können niedermolekulare Dispergiermittel bei ungünstigen Klimabedingungen wie hoher Luftfeuchtigkeit und/oder Temperatur leicht ausschwitzen, wodurch es in Aufnahme- bzw. Wiedergabegeräten zu Ablagerungen an allen bandführenden Teilen, insbesondere am Magnetkopf kommt. Außerdem wird durch solche Ablagerungen die Reibung erhöht, wodurch das magnetische Aufzeichnungsmedium beim Durchgang durch ein Lese- oder Schreibgerät blockieren kann.

Darüber hinaus kann es beim Einsatz solcher Dispergiermittel zu Verträglichkeitsproblemen in der Dispersion kommen. Da die Dispergiermittel polare Gruppen aufweisen, nimmt die Hydrophilie der Schicht stark zu, was bei Feuchtigkeit oder hoher Temperatur ein Quellen der Schicht, Ausschwitzen der Dispergier- und Gleitmittel sowie andere mechanische Veränderungen zur Folge haben kann. Zur Verbesserung der dispergierenden Eigenschaften von Polyurethanbindemitteln wurde daher beispielsweise der Vorschlag gemacht, in ein solches Bindemittel polare Gruppen einzubauen. So ist beispielsweise aus der EP-A 0 193 084 der Einbau von Diolen, die zusätzliche polare Gruppen tragen, in Polyurethane bekannt. Derartige Bindemittel teilen zwar die Pigmente sehr gut auf, führen aber insbesondere bei Pigmenten mit einem hohen BET-Wert zu Dispersionen mit extrem ungünstigen rheologischen Eigenschaften wie erhöhter Fließgrenze und erhöhter Viskosität. Hierdurch wird die Verarbeitung und der Verguß solcher Dispersionen zu Magnetschichten deutlich erschwert.

Häufig wird der Mangel an guten Dispergiereigenschaften von ionische Gruppen tragenden Bindemitteln auch der Tatsache zugeschrieben, daß die ionischen Gruppen nicht über ausreichende Flexibilität, bezogen auf eine Abkopplung von der Hauptkette, verfügen, was sich negativ auf die Dispergiereigenschaften eines solchen Bindemittels auswirkt.

So beschreibt beispielsweise die US-A 5,695,884 ein thermoplastisches Polyurethan, das mindestens eine Sulfonatgruppe aufweist. Die Sulfonatgruppe wird in das Polyurethan über ein sulfonatgruppenhaltiges Polyesterpolyol eingebracht, das wiederum die Sulfonatgruppe als Sulfophthalsäurederivat enthält. Problematisch wirkt sich bei solchen Polyurethanen aus, daß die Sulfonatgruppe aufgrund ihrer Bindung an den starren Phthalsäurekörper nur eine eingeschränkte Beweglichkeit aufweist, was sich häufig negativ auf die Dispersionseigenschaften des entsprechenden Polyurethans auswirkt. Darüber hinaus befinden sich solche Sulfonatgruppen nach dem Einbau in das Polyurethan direkt in der Hauptkette, wodurch ebenfalls Flexibilität und Beweglichkeit eingeschränkt werden können.

Weiterhin ist der Gehalt an ionogenen, dispergieraktiven Gruppen in solchen Bindemitteln in der Regel auf eine bestimmte Obergrenze beschränkt, da sonst bestimmte negative Effekte auftreten, welche die Qualität des Bindemittels mindern. Zu den genannten negativen Effekten können beispielsweise das Auftreten von Überbrückungsflockulation und ein drastisches Ansteigen der Hydrophilie des Bindemittels zählen, was sich in einer erhöhten Empfindlichkeit gegenüber Luftfeuchtigkeit und einem Quellen des Bindemittels in feuchter Umgebung äußern kann.

Häufig ist das Einbringen ionischer Gruppen in Polyurethanbindemittel auch deswegen problematisch, weil die bei der Herstellung der Polyurethanbindemittel eingesetzten Edukte oft nur in Wasser oder wäßrigen Lösemittelgemischen löslich sind. Solche in wäßriger Umgebung hergestellten Polyurethanbindemittel weisen jedoch entweder einen bei der Herstellung magnetischer Aufzeichnungsmedien unerwünschten Gehalt an Restwasser auf oder sie müssen in aufwendigen Verfahren von im Polyurethanbindemittel vorliegenden Wasser befreit werden.

Das Einbringen ionischer Gruppen in Polyurethanbindemittel ist beispielsweise aus der DE-A 40 39 749 bekannt. Hier wird beschrieben, daß ein in Ethern bzw. Ketonen lösliches, verzweigtes Polyurethan mit von OH-Gruppen freien Harnstoffgruppen an den Kettenenden und einem Molekulargewicht zwischen 30.000 und 200.000 als Bindemittel in magnetischen Aufzeichnungsmedien geeignet ist. Problematisch wirkt sich bei diesem Bindemittel jedoch aus, daß die dort beschriebenen Verbindungen keine Blockstruktur aufweisen können.

Die DE-C 34 07 563 beschreibt die Einführung von Sulfonsäuregruppen in Polyadditions- bzw. Polykondensationsprodukte. Hierbei wird ein zwei OH-Gruppen tragendes, endständig ungesättigtes Diol durch die Bisulfit-Additionsreaktion in ein endständiges Sulfonat überfüllt. Das Sulfonat wird anschließend über die beiden OH-Gruppen beispielsweise in ein Polyurethan eingebunden. Auf diese Weise läßt sich zwar der Nachteil vermeiden, daß die Sulfonatgruppe an einem starren Gerüst direkt an der Hauptkette befestigt ist, die beschriebene Methode und die danach erhältlichen Verbindungen weisen jedoch ebenfalls eine Reihe von Nachteilen auf. So wirkt sich beispielsweise nachteilig aus, daß die Bisulfit-Additionsreaktion in wäßriger Umgebung stattfindet. Wird in dieser Umgebung ein relativ hydrophobes Diol für die Bisulfit-Additionsreaktion eingesetzt, so gestaltet sich die Isolierung des Reaktionsprodukts in der Regel schwierig. Daher werden bei solchen Reaktionen üblicherweise hydrophile Verbindungen eingesetzt, beispielsweise die in der Druckschrift beschriebenen Polyether. Solche sulfonierten Polyether lassen sich zwar anschließend in polymere Verbindungen einbauen, tragen jedoch einerseits nichts zur Flexibilisierung der Hauptkette bei, andererseits läßt sich aufgrund der Reaktionsbedingungen bei der Synthese die Hydrophilie der die Sulfonatgruppe tragenden Seitenkette nur in engen Grenzen variieren.

Die DE-B 19 54 090 beschreibt ein Verfahren zur Herstellung von 2-(Aminopropionamido)-alkansulfonsäuresalzen und ihre Verwendung als anionische Aufbaukomponente bei der Herstellung von Polyurethandispersionen. Nachteilig wirkt sich bei den dort beschriebenen Substanzen aus, daß eine Einbindung in ein Polyurethan nur über eine Aminogruppe möglich ist. Die dabei entstehenden Polyharnstoffe weisen jedoch eine Reihe von Eigenschaften auf, die sich bei deren Anwendung zur Dispersion von Feststoffen in einer Kunststoffmatrix nachteilig auswirken. Darüber hinaus sind die beschriebenen Verbindungen nur in wäßriger Phase verarbeitbar. Dies ist insbesondere dann, wenn auf Wasserfreiheit der entsprechenden Verbindungen Wert gelegt wird, ein gravierender Nachteil.

Es bestand daher ein Bedarf nach Bindemittelzusammensetzungen für magnetische Aufzeichnungsmedien, welche einfach herzustellen sind, ausgezeichnete Dispersionseigenschaften aufweisen, möglichst wasserfrei sind und im Hinblick auf die physikalischen Eigenschaften des Aufzeichnungsmediums eine möglichst einfache Steuerung dieser Eigenschaften durch gezielte chemische Modifikationen erlauben.

Der Erfindung lag demnach die Aufgabe zugrunde, Bindemittelzusammensetzungen zur Herstellung solcher magnetischer Aufzeichnungsmedien und solche magnetischen Aufzeichnungsmedien selbst zur Verfügung zu stellen.

Gelöst wird die erfindungsgemäße Aufgabe durch eine Bindemittelzusammensetzung, die mindestens ein Polyurethan mit einer Struktureinheit gemäß der allgemeinen Formel I 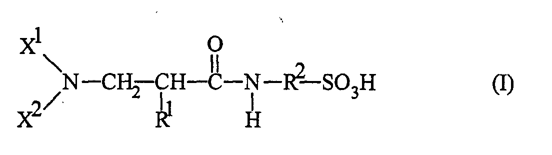 oder ein Salz davon, aufweist.

Gegenstand der vorliegenden Erfindung ist daher eine Bindemittelzusammensetzung, die mindestens ein Polyurethan mit einer Struktureinheit gemäß der allgemeinen Formel I 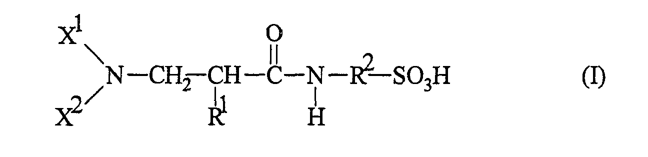 worin R¹ für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R² für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, X¹ und X² jeweils unabhängig voneinander für einen mindestens zwei C-Atome umfassenden, gegebenenfalls substituierten Rest stehen, wobei mindestens einer der Reste X¹ und X² durch Reaktion einer OH-, NH₂,-, NHR³ oder SH-Gruppe in das Polyurethan eingebunden ist, oder ein Salz davon, und mindestens ein magnetisches oder magnetisierbares Pigment enthält.

Unter einer "Bindemittelzusammensetzung" wird im Rahmen der vorliegenden Erfindung ein Gemisch verstanden, das mindestens ein Polyurethan mit einer Struktureinheit gemäß der allgemeinen Formel I als Bindemittel und mindestens ein magnetisches oder magnetisierbares Pigment aufweist.

Unter einem "Bindemittel" wird im Rahmen der vorliegenden Erfindung ein Polymeres oder ein Gemisch aus zwei oder mehr Polymeren verstanden, die nach erfolgter chemischer oder physikalischer Trocknung wesentlich am Erhalt stabiler magnetischer Dispersionen und an einer ausreichenden mechanischen Stabilität eines aus dem Bindemittel hergestellten magnetischen Aufzeichnungsmediums beteiligt sind.

Die Einbindung der Struktureinheiten der allgemeinen Formel I in das Polyurethan erfolgt, wie weiter unten detailliert beschrieben wird, durch Umsetzung einer entsprechend funktionalisierten Sulfonsäureverbindung, oder eines Gemischs aus zwei oder mehr davon, mit entsprechenden mindestens zwei Isocyanatgruppen (NCO-Gruppen) tragenden Verbindung, wobei eine Polyadditionsreaktion zum Polyurethan stattfindet.

Unter einer "Sulfonsäureverbindung" wird im Rahmen des vorliegenden Textes eine Verbindung gemäß der allgemeinen Formel II 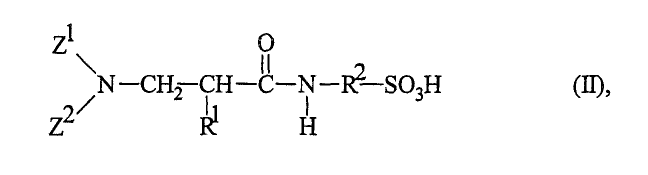 oder ein Salz davon verstanden, worin R¹ und R² die oben genannte Bedeutung aufweisen und Z¹ und Z² jeweils unabhängig voneinander für einen mindestens zwei C-Atome umfassenden, gegebenenfalls substituierten Rest stehen, wobei mindestens einer der Reste Z¹ und Z² eine OH-, NH₂-, NHR³ oder SH-Gruppe aufweist.

Unter Salzen werden beispielsweise die Umsetzungsprodukte der Sulfonsäuregruppen tragenden Struktureinheiten mit Basen verstanden, wobei die Basen sowohl anorganischer als auch organischer Natur sein können. Im Rahmen der vorliegenden Erfindung sind sowohl solche Sulfonsäuregruppen tragenden Struktureinheiten der allgemeinen Formel I geeignet, die bereits vor der Einbindung in ein Polyurethan als Salz vorlagen, als auch solche, die erst nach der Einbindung in das Polyurethan in die Salzform überführt wurden. Beispiele für entsprechende Salze sind die Salze der Alkalimetalle wie Lithium, Natrium, Kalium, Rubidium oder Cäsium oder die Salze der Erdalkalimetalle wie Magnesium, Calcium oder Strontium. Neben den genannten Salzen mit anorganischen Verbindungen eignen sich jedoch im Rahmen der vorliegenden Verbindung auch Salze der oben genannten Sulfonsäuren mit organischen Salzen. Im Rahmen einer bevorzugten Ausführungsform der vorliegenden Erfindung werden unter Salzen der oben genannten Sulfonsäuren Salze mit Aminoverbindungen verstanden. Besonders geeignete Aminoverbindungen sind Trialkylamine oder Hydroxyalkylamine wie Ethanolamin oder Diethanolamin, wobei die entsprechenden Alkylreste unabhängig voneinander 1 bis etwa 22 C-Atome aufweisen. In einer weiteren bevorzugten Ausführungsform betrifft die Erfindung Salze der oben genannten Sulfonsäuren mit Trialkylaminen, deren Alkylreste unabhängig voneinander 1 bis etwa 5 C-Atome aufweisen.

Die in diesem Text angegebenen Molekulargewichte tragen die Einheit g/mol, sofern nichts anderes angegeben ist. Molekulargewichte von Verbindungen die eine statistische Molekulargewichtsverteilung aufweisen, wurden durch GPC bestimmt. Hierbei kamen folgende Materialien zum Einsatz:
- Säulenmaterial: PL-Gel 5 µm 2x 500 Å. 1X 1000 1 x 10.000
- Elutionsmittel: THF 1 ml/min
- Pumpe : Waters Typ 510
- Autosampler : Waters Typ 717
- UV Detektor: Waters Lambda - Max 481
- RI - Detektor: Waters Typ 410.

Der Rest R¹ steht im Rahmen der vorliegenden Erfindung für H oder einen linearen oder verzweigten, gesättigten oder ungesättigten aliphatischen Kohlenwasserstoffrest mit 1 bis etwa 20 C-Atomen, einen gesättigten oder ungesättigten, gegebenenfalls substituierten cycloaliphatischen Kohlenwasserstoffrest mit 4 bis etwa 20 C-Atomen oder einen gegebenenfalls substituierten araliphatischen Kohlenwasserstoffrest mit 6 bis etwa 40 C-Atomen. Im Rahmen der angegebenen Bereiche kann der Rest R¹ so gewählt werden, daß die beanspruchte Sulfonsäureverbindung z. B. ein bestimmtes Löslichkeitsprofil, beispielsweise im Zusammenhang mit ihrer Herstellung oder ihrer späteren Verwendung, erfüllt oder im Hinblick auf eine andere, vom Vorhandensein bestimmter Alkylketten im Molekül abhängige Eigenschaft auf eine entsprechende Anwendung hin maßgeschneidert werden kann. Im Rahmen einer bevorzugten Ausführungsform der vorliegenden Erfindung steht der Rest R¹ für Wasserstoff oder einen linearen oder verzweigten, gesättigten Kohlenwasserstoffrest mit 1 bis etwa 16, insbesondere 1 bis 6 C-Atomen. Im Rahmen einer besonders bevorzugten Ausführungsform der Erfindung steht der Rest R¹ für Wasserstoff oder CH₃.

Der Rest R² steht im Rahmen der vorliegenden Erfindung für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen. Neben der bereits im Rahmen der Ausführungen zum Rest R¹ beschriebenen Beeinflussung der Löslichkeitsparameter, kann eine Veränderung des Rests R² im Rahmen der vorliegenden Erfindung auch dazu benutzt werden, die Flexibilität und den Abstand der Sulfonsäuregruppe vom Rest des Moleküls, insbesondere beim Einbau der erfindungsgemäßen Sulfonsäureverbindungen in ein Polymeres, zu variieren. Im Rahmen einer bevorzugten Ausführungsform der Erfindung steht der Rest R² für einen linearen oder verzweigten aliphatischen Kohlenwasserstoffrest mit 2 bis 8 C-Atomen.

Die Reste X¹ und X² der allgemeinen Formel I weisen im Rahmen der vorliegenden Erfindung jeweils mindestens zwei C-Atome auf. Die Zahl der C-Atome bezieht sich dabei nicht notwendigerweise auf in einer Kette kovalent miteinander verbundene C-Atome, sondern die vorliegende Erfindung umfaßt auch solche Sulfonsäureverbindungen, deren Reste X¹ und X² jeweils mindestens zwei C-Atome umfassen, die nicht direkt kovalent sondern beispielsweise über ein weiteres Atom wie O oder N miteinander verbunden sind.

Die Reste X¹ und X² weisen im Rahmen der vorliegenden Erfindung insgesamt mindestens eine kovalente Bindung an ein Polyurethan über eine OH-, NH₂-, NHR³- oder SH-Gruppe auf. In einer bevorzugten Ausführungsform der vorliegenden Erfindungen kann die Zahl solcher Bindungen beispielsweise 1 bis etwa 8, insbesondere 1 bis etwa 4 betragen. In einer weiteren bevorzugten Ausführungsform der Erfindung beträgt die Zahl der Bindungen an ein Polyurethan in den Resten X¹ und X² zusammen 2 oder 3. Die oben genannten Bindungen können dabei nur über einen der beiden Reste X¹ oder X² bestehen, es ist jedoch ebensogut möglich, daß die Einbindung in das Polyurethan über beide Reste X¹ und X² stattfindet. Im Rahmen einer bevorzugten Ausführungsform der Erfindung weist jeder der Reste X¹ und X² jeweils mindestens eine kovalente Bindung an das Polyurethan über eine OH-, NH₂, NHR³ oder SH-Gruppe auf. In einer weiteren bevorzugten Ausführungsform der Erfindung weist jeder der beiden Reste X¹ und X² jeweils eine kovalente Bindung an das Polyurethan über eine OH-Gruppe auf.

In einer bevorzugten Ausführungsform der Erfindung stehen die beiden Reste X¹ und X² unabhängig voneinander für R³-Q-, R³-Q-(Y-O-)ₘY-Q- oder R³-O-T-Q- stehen, wobei Q für O, NH, NR³ oder S, R³ für einen linearen oder verzweigten, gesättigten oder ungesättigten, gegebenenfalls aromatisch substituierten Alkylrest mit 2 bis 44 C-Atomen, Y für einen Alkylrest mit 2 bis 10 C-Atomen, T für ein durch Polymerisation, Polyaddition oder Polykondensation erhältliches Polymeres mit einem Molekulargewicht M_{w} von 150 bis 5000 und m für einen Wert von 1 bis 300 steht.

Unter einem "durch Polymerisation, Polyaddition oder Polykondensation erhältlichen Polymeren" mit einem Molekulargewicht M_{w} von 150 bis 5000 werden im Rahmen der vorliegenden Erfindung beispielsweise Polyester, Polyether, Polyamide, Polyurethane, Polycarbonate, Polylactone, entsprechend funktionalisierte Polyacrylate und Polymethacrylate, Polyvinylacetate, Polyvinylalkohole, Polyethylenimine, Polyvinylpyrrolidone, Polyacrylnitrile, Polyacrylamide, Polyvinylamide oder Polyvinylamine verstanden.

In einer weiteren bevorzugten Ausführungsform der Erfindung steht R³ für einen linearen oder verzweigten, gesättigten, gegebenenfalls aromatisch substituierten Alkylrest mit 2 bis etwa 10, insbesondere 3 bis etwa 8 C-Atomen.

Wenn X¹ oder X² für R³-Q-(Y-O-)ₘY-Q- steht, dann steht Y in einer bevorzugten Ausführungsform der Erfindung für einen gesättigten, linearen oder verzweigten Alkylrest mit 2 bis 4, insbesondere 2 oder 3 C-Atomen oder einen aromatischen substituierten, linearen oder verzweigten Alkylrest mit insgesamt 8 bis etwa 18 C-Atomen. X¹ oder X², oder beide, stehen dann für eine Polyetherkette, deren Molekulargewicht M_{w} zum einen von Y, hauptsächlich jedoch vom Wert für m abhängt. In einer bevorzugten Ausführungsform der Erfindung steht m für einen Wert von 1 bis etwa 200, insbesondere von etwa 3 bis etwa 50. Wenn der Wert für m größer als 1 ist, so kann Y für verschiedene Alkylreste stehen, deren Zahl an C-Atomen im bereits oben genannten Bereich liegt. Bei größeren Werten für m, beispielsweise in einem Bereich von etwa 5 bis etwa 100, können die verschiedenen Alkylreste Y in statistischer Abfolge oder beliebig blockweise hintereinander angeordnet sein. Der Wert m muß nicht notwendigerweise ein ganzzahliger Wert sein, m kann ebensogut beliebige Werte annehmen, die zwischen zwei ganzen Zahlen im oben genannten Bereich liegen. Wenn m einen nicht ganzzahligen Wert annimmt, so stellt m einen Durchschnittswert dar, wie er im Rahmen üblicher Polyethersynthesen aufgrund der statistischen Verteilung von Molekulargewichten bei der Polyaddition auftritt. In einer weiteren bevorzugten Ausführungsform der Erfindung steht Y für CH₂-CH₂ oder CH(CH₃)-CH₂ oder CH₂-CH(CH₃) oder eine statistische oder blockweise Abfolge dieser Reste.

Polyether der oben genannten Art können beispielsweise durch Polymerisation von Ethylenoxid, Propylenoxid, Butylenoxid, Tetrahydrofuran, Styroloxid oder Epichlorhydrin mit sich selbst, z. B. in Gegenwart von basischen Katalysatoren wie Natriummethylat, Kaliummethylat, Natriumethylat, Kaliumethylat, Natriumhydroxyd, Kaliumhydroxid oder BF₃, oder durch Anlagerung der genannten Verbindungen, gegebenenfalls im Gemisch oder nacheinander, an Startkomponenten mit reaktionsfähigen Wasserstoffatomen wie Alkohole oder Amine, z. B. Wasser, Diethylenglykol, Propandiol-1,2, Propandiol-1,3, 1,2-Bis(4-hydroxydiphenyl)propan oder Anilin erhalten werden.

In einer weiteren bevorzugten Ausführungsform der vorliegenden Erfindung stehen der Rest X¹ oder der Rest X² oder beide für R³-O-T-Q-. T steht darin für ein Polyester, ein Polyamid, ein Polycarbonat, ein Polyurethan oder ein Polylacton mit einem Molekulargewicht M_{w} von etwa 200 bis etwa 5000. In einer weiteren bevorzugten Ausführungsform der Erfindung handelt es sich bei den genannten Polymeren um lineare Polymere.

In einer weiteren bevorzugten Ausführungsform der vorliegenden Erfindung steht R² für einen linearen oder verzweigten, gesättigten Alkylrest mit 2 bis etwa 6 C-Atomen.

Geeignete Polyester lassen sich beispielsweise durch Polykondensation von linearen oder verzweigten, aliphatischen oder cycloaliphatischen, gesättigten oder ungesättigten Diolen mit linearen oder verzweigten, gesättigten oder ungesättigten, aliphatischen oder cycloaliphatischen Dicarbonsäuren oder mit aromatischen Dicarbonsäuren erhalten. Geeignete Diole sind beispielsweise Ethylenglykol, Propandiol-1,2, Propandiol-1,3, Butandiol-1,3, Butandiol-1,4, Butendiol-1,4, Butindiol-1,4, Pentandiol-1,5, Neopentylglykol, Bis-(hydroxymethyl)-cyclohexane wie 1,4-Bis-(hydroxymethyl)-cyclohexan, 2-Methylpropan-1,3-diol, Methylpentandiole, Diethylenglykol, Triethylenglykol, Tetraethylenglykol, Dipropylenglykol, Dibutylenglykol sowie weitere höhere Oligomere der genannten Glykole, wobei auch gemischte Oligomere geeignet sind. Im Rahmen der vorliegenden Erfindung sind Polyester bevorzugt, deren Herstellung unter Verwendung von Alkoholen der allgemeinen Formel HO-(CH₂)ₖ-OH durchgeführt wurde, wobei k für eine Zahl von 2 bis etwa 44 steht. Beispiele für solche Alkohole sind Ethandiol, Propandiol-1,3, Butandiol-1,4, Pentandiol-1,5, Hexandiol-1,6, Heptandiol-1,7, Octandiol-1,8, Nonandiol-1,9, Decandiol-1,10, Undecandiol-1,11, oder Dodecandiol-1,12, oder Gemische aus zwei oder mehr davon.

Als Dicarbonsäuren eignen sich beispielsweise Dicarbonsäuren der allgemeinen Formel HOOC-(CH₂)j-COOH, wobei j für eine Zahl von 1 bis etwa 44, beispielsweise für eine gerade Zahl von 2 bis etwa 20 steht. Beispiele für derartige Dicarbonsäuren sind Glutarsäure, Pimelinsäure, Korksäure, Sebacinsäure, Dodecansäure, Phthalsäure, Isophthalsäure, Adipinsäure, Bernsteinsäure oder Terephthalsäure. Ebenfalls als Säuren zum Aufbau der oben genannten Polyester geeignet sind Azelainsäure, Maleinsäure, Fumarsäure oder Dimerfettsäuren, Tetrahydrophthalsäure, Hexahydrophthalsäure, Tetrachlorophthalsäure, Endomethylentetrahydrophthalsäure, oder Gemische aus zwei oder mehr davon.

Gegebenenfalls können untergeordnete Mengen an Polycarbonsäuren eingesetzt werden, die eine Funktionalität von mehr als zwei aufweisen. Beispiele hierfür sind Trimellithsäure oder Pyromellithsäure.

Gegebenenfalls kann es bei der Herstellung der Polyesterpolyole vorteilhaft sein, die oben genannten Carbonsäuren in Form entsprechender Säurederivate wie Carbonsäureanhydride, beispielsweise Phthalsäureanhydrid, Tetrahydrophthalsäureanhydrid, Hexahydrophthalsäureanhydrid, Tetrachlorophthalsäureanhydrid, Endomethylentetrahydrophthalsäureanhydrid, Glutarsäureanhydrid, Maleinsäureanhydrid, oder Gemische aus zwei oder mehr davon, Carbonsäurechloride oder Carbonsäureester, oder Gemische aus zwei oder mehr davon, einzusetzen.

In einer bevorzugten Ausführungsform der vorliegenden Erfindung weisen die eingesetzten Polyester ein Molekulargewicht von etwa 150 bis etwa 1500 auf.

Im Rahmen der vorliegenden Erfindung als Rest T geeignete Polyamide lassen sich beispielsweise durch Umsetzung der oben genannten Dicarbonsäuren mit entsprechenden Diaminen herstellen. Geeignete Diamine sind beispielsweise solche, die ein Molekulargewicht von etwa 32 bis etwa 200 g/mol aufweisen und mindestens zwei primäre, 2 sekundäre oder eine primäre und eine sekundäre Aminogruppe aufweisen. Beispiele hierfür sind Diaminoethan, Diaminopropane, Diaminobutane, Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder, gegebenenfalls in geringen Mengen, Diamine wie die Diethylentriamin oder 1,8-Diamino-4-aminomethyloctan. Im Rahmen der vorliegenden Erfindung einsetzbare Polyamide weisen in einer bevorzugten Ausführungsform ein Molekulargewicht von etwa 100 bis etwa 800 auf.

Weiterhin als Diole zum Aufbau entsprechender, als Rest T geeigneter Polymere sind Polycarbonatpolyole wie sie z. B. durch Umsetzung von Phosgen mit einem Überschuß der oben genannten Polyole erhältlich sind. In einer bevorzugten Ausführungsform der Erfindung weisen die Polycarbonatpolyole ein Molekulargewicht von etwa 100 bis etwa 3000, beispielsweise etwa 200 bis etwa 1500 auf. In einer weiteren bevorzugten Ausführungsform der Erfindung handelt es sich bei den Polycarbonatpolyolen um Polycarbonatdiole.

Zum Einsatz als Rest T geeignete Polyurethane sind beispielsweise durch Umsetzung entsprechender Polyisocyanate mit gegenüber Isocyanaten mindestens difunktionellen Verbindungen erhältlich. Entsprechende Umsetzungen und daraus erhältliche, geeignete Polyurethane werden weiter unten im Rahmen dieses Textes beschrieben.

Weiterhin erfindungsgemäß zum Einsatz als Rest T geeignet sind weiterhin Polylactone wie sie durch Homo- oder Mischpolymerisation von Lactonen, gegebenenfalls in Gegenwart eines geeigneten, difunktionellen Startermoleküls, erhältlich sind. Als Lactone kommen bevorzugt solche in Betracht, die sich von Verbindungen der allgemeinen Formel HO-(CH₂)ᵢ-COOH ableiten, wobei i für eine Zahl von 1 bis etwa 44 steht. Beispiele sind ε-Caprolacton, β-Propiolacton, γ-Butyrolacton oder Methyl-ε-caprolacton, oder Gemische aus zwei oder mehr davon. Im Rahmen der vorliegenden Erfindung bevorzugt eingesetzte Polylactone weisen ein Molekulargewicht von etwa 100 bis etwa 3000, insbesondere etwa 200 bis etwa 1500 auf.

Es ist im Rahmen der vorliegenden Erfindung nicht erforderlich, daß die beiden Reste X¹ und X² identisch sind. Jeder der beiden genannten Reste kann unabhängig voneinander für einen Rest stehen, wie er oben definiert wurde.

Die zur Einbindung in die oben genannten Polyurethane benötigten Sulfonsäureverbindungen gemäß der allgemeinen Formel II lassen sich gemäß den Regeln der organischen Chemie auf verschiedene Weise herstellen. So ist es beispielsweise möglich, die erfindungsgemäßen Verbindungen durch Umsetzung entsprechender Komponenten A und B im Sinne einer Michael-Addition herzustellen.

Hierzu wird beispielsweise eine Verbindung der allgemeinen Formel III

Z¹-NH-Z² (III),

worin Z¹ und Z² wie oben definiert sind, mit einer Verbindung der allgemeinen Formel IV 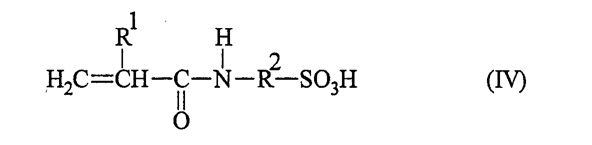 worin R¹ und R² wie oben definiert sind, umgesetzt.

Verbindungen der allgemeinen Formel III lassen sich nach allgemein bekannten Grundsätzen der organischen Chemie herstellen. Ausgangspunkt zur Herstellung solcher Moleküle ist in der Regel die Verbindung NH(R³OH)₂, die beispielsweise zur Herstellung der oben genannten Polyether mit entsprechenden Alkylenoxiden, wie bereits oben beschrieben, umgesetzt werden. Analog läßt sich durch Kondensationsreaktion dieser Verbindung mit entsprechend funktionalisierten Polyestern, Polyamiden, Polycarbonaten oder Polylactonen ein Molekül der allgemeinen Formel II erhalten.

Vorliegend wird daher zur Herstellung von Sulfonsäureverbindungen der allgemeinen Formel II, die zur Herstellung von Polyurethanen der oben genannten Art geeignet sind, ein Amin der allgemeinen Formel III mit einer ethylenisch ungesättigten Amidosulfonsäureverbindung der allgemeinen Formel IV unter geeigneten Bedingungen umgesetzt.

Die Reaktion kann mit oder ohne Lösemittel ausgeführt werden. Geeignete Lösemittel sind beispielsweise Ether wie Ethylenglykoldimethylether oder Tetrahydrofuran, Ketone wie Aceton oder Methylethylketon, N-Methylpyrrolidon, N,N-Dimethylformamid, Acetonitril, Trichlormethan oder Toluol, oder Gemische aus zwei oder mehr davon. Gegebenenfalls kann zusätzlich zu den oben genannten Lösemitteln, insbesondere zusammen mit den oben genannten polaren Lösemitteln, Wasser im Lösemittelgemisch während der Reaktionen vorliegen. Wenn die erfindungsgemäßen Verbindungen zur Herstellung von im wesentlichen wasserfreien Polymeren eingesetzt werden sollen, dann ist es im Rahmen der vorliegenden Erfindung bevorzugt, die Reaktion in Abwesenheit von Wasser durchzuführen. In diesem Fall sind besonders bevorzugte Lösemittel Tetrahydrofuran, Aceton oder Methylethylketon, oder ein Gemisch aus zwei oder mehr davon. Die Reaktionstemperatur liegt zwischen etwa 0 °C und etwa 200 °C. Gute Ergebnisse lassen sich beispielsweise in einem Temperaturbereich von etwa 20 °C bis etwa 90 °C erzielen. Die Umsetzung kann gegebenenfalls durch Zugabe eines basischen Katalysators beschleunigt werden. Geeignete basische Katalysatoren sind beispielsweise Triethylamin, Pyridin, Benzyltrimethylammoniumhydroxid, Natriumhydroxid oder Kaliumhydroxid.

Gegebenenfalls kann während der Reaktion noch ein Polymerisationsinhibitor im Reaktionsgemisch vorliegen. Geeignete Polymerisationsinhibitoren sind beispielsweise Hydrochinonmonomethylether, stabile Radikale wie 2,2,6,6-Tetramethylpiperidin-1-oxylradikal (TEMPO) oder 2,2,6,6-Tetramethyl-4-hydroxypiperidin-1-oxylradikal (TEMPOL), Polymerisationsinhibitoren aus der Gruppe der sterisch gehinderten Amine (HALS) oder aus der Gruppe der Nitroxide.

Zur Herstellung der erfindungsgemäßen Bindemittelzusammensetzung werden die oben beschriebenen Sulfonsäureverbindungen der allgemeinen Formel II in Polyurethane eingebaut. In einer bevorzugten Ausführungsform der vorliegenden Erfindung handelt es sich bei den Polyurethanen um thermoplastische Polyurethane. In einer weiteren bevorzugten Ausführungsform der Erfindung sind die thermoplastischen Polyurethane nach dem Einbau der Struktureinheiten gemäß der allgemeinen Formel I in den oben genannten organischen Lösemitteln, insbesondere in Tetrahydrofuran, Methylethylketon, N-Methylpyrrolidon oder N,N-Dimethylformamid löslich.

Die im Rahmen der erfindungsgemäßen Bindemittelzusammensetzung einsetzbaren Polyurethane lassen sich beispielsweise durch Umsetzung von
- A:: einem Polyol mit mindestens etwa 2 OH-Gruppen und einem Molekulargewicht von etwa 500 bis etwa 10.000, oder einem Gemisch aus zwei oder mehr davon, und
- B:: einem linearen aliphatischen Diol mit einem Molekulargewicht von weniger als 500, oder einem Gemisch aus zwei oder mehr davon, und
- C:: einem Polyisocyanat mit 6 bis etwa 30 C-Atomen, oder einem Gemisch aus zwei oder mehr davon, und
- D:: einer Verbindung gemäß der allgemeinen Formel II oder einem Salz davon und gegebenenfalls einer weiteren Verbindung mit mindestens einer ionischen oder ionisierbaren Gruppe und mindestens etwa zwei gegenüber Isocyanaten reaktionsfähige Gruppen, oder einem Gemisch aus zwei oder mehr davon, und gegebenenfalls
- E:: einem Polyol mit mindestens etwa 3 OH-Gruppen und 3 bis etwa 10 C-Atomen, oder einem Gemisch aus zwei oder mehr davon, und gegebenenfalls
- F:: einem Aminoalkohol mit 2 bis etwa 16 C-Atomen, oder einem Gemisch aus zwei oder mehr davon, oder gegebenenfalls einer gegenüber Isocyanaten mindestens difunktionellen Aminoverbindung, oder einem Gemisch aus zwei oder mehr davon,
herstellen.

Als Komponente A sind beispielsweise Polyesterpolyole, Polyetherpolyole, Polycarbonatpolyole oder Polylactonpolyole mit einem Molekulargewicht von etwa 400 bis etwa 10.000, beispielsweise von etwa 800 bis etwa 5000 geeignet. In einer bevorzugten Ausführungsform der vorliegenden Erfindung weisen die als Komponente A eingesetzten Polyole ein Molekulargewicht von etwa 1000 bis etwa 2500 auf. Im Rahmen der vorliegenden Erfindung besonders geeignete Polyole sind beispielsweise Polyesterpolyole und Polyetherpolyole die etwa 2 bis etwa 3 OH-Gruppen pro Molekül aufweisen. In einer weiteren bevorzugten Ausführungsform der Erfindung tragen die als Komponente A eingesetzten Polyole etwa 1,9 bis etwa 2,1, insbesondere etwa 2 OH-Gruppen pro Molekül. Die Säurezahl der als Komponente A eingesetzten Verbindungen beträgt in einer bevorzugten Ausführungsform der vorliegenden Erfindung weniger als etwa 10, beispielsweise weniger als 8 oder weniger als 5. In einer weiteren bevorzugten Ausführungsform der Erfindung ist die Säurezahl der als Komponente A eingesetzten Polyole kleiner als etwa 3.

Zum Einsatz als Komponente A geeignete Polyester lassen sich beispielsweise durch Polykondensation von linearen oder verzweigten, aliphatischen oder cycloaliphatischen, gesättigten oder ungesättigten Diolen mit 2 bis etwa 20 C-Atomen, mit linearen oder verzweigten, gesättigten oder ungesättigten, aliphatischen oder cycloaliphatischen Dicarbonsäuren oder mit aromatischen Dicarbonsäuren mit 4 bis etwa 15 C-Atomen, beispielsweise etwa 4 bis etwa 8 C-Atomen, erhalten.

Geeignete Diole sind beispielsweise Ethylenglykol, Propandiol-1,2, Propandiol-1,3, Butandiol-1,3, Butandiol-1,4, Butendiol-1,4, Butindiol-1,4, Pentandiol-1,5, Neopentylglykol, Bis-(hydroxymethyl)-cyclohexane wie 1,4-Bis-(hydroxymethyl)-cyclohexan, 2-Methylpropan-1,3-diol, 2,2-Dimethylpropandiol-1,3, 2,2,4-Trimethylpentandiol-1,5, weitere Methylpentandiole, Diethylenglykol, Triethylenglykol, Tetraethylenglykol, Dipropylenglykol, Dibutylenglykol sowie weitere höhere Oligomere der genannten Glykole, wobei auch gemischte Oligomere geeignet sind, Dihydroxycyclohexan, 1,4-Dimethylolcyclohexan, 1,4-Diethanolcyclohexan2-Methyl-2-butyl-1,3-propandiol, 2,2-Dimethyl-1,4-butandiol, 1,4-Dimethylolcyclohexan, Hydroxypivalinsäureneopentylglykolester, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate, die Hydrierungsprodukte der genannten Bisphenol A- und Bisphenol F-Derivate oder die Produkte der entsprechenden Umsetzung von einer Verbindung, oder einem Gemisch aus zwei oder mehr der genannten Verbindungen mit einem Alkylenoxid mit zwei bis etwa 8 C-Atomen, oder einem Gemisch aus zwei oder mehr solcher Alkylenoxide.

Im Rahmen der vorliegenden Erfindungen sind Polyester bevorzugt, deren Herstellung unter Verwendung von Alkoholen der allgemeinen Formel HO-(CH₂)ₖ-OH durchgeführt wurde. Beispiele für solche Alkohole sind bereits oben genannten oder Gemische aus zwei oder mehr davon.

In einer bevorzugten Ausführungsform der Erfindung werden 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A) eingesetzt. Je nach den gewünschten Eigenschaften der Polyurethane können die genannten Polyesterpolyole alleine oder als Mischung von zwei oder mehr der genannten Polyesterpolyole in verschiedenen Mengenverhältnissen zur Herstellung der Polyurethane eingesetzt werden.

Als Dicarbonsäuren eignen sich beispielsweise Dicarbonsäuren der allgemeinen Formel HOOC-(CH₂)ⱼ-COOH, wie sie bereits oben genannt wurden. In einer bevorzugten Ausführungsform der vorliegenden Erfindung werden als Komponente A Polyester eingesetzt, die unter Verwendung von Adipinsäure, Bernsteinsäure, Phthalsäure, oder Gemischen aus zwei oder mehr davon hergestellt wurden.

Gegebenenfalls kann es bei der Herstellung der als Komponente A geeigneten Polyole vorteilhaft sein, die oben genannten Carbonsäuren in Form entsprechender Säurederivate, wie sie bereits oben genannt wurden, einzusetzen.

Polyetherpolyole, die zum Einsatz als Komponente A geeignet sind, sind im wesentlichen lineare, endständige OH-Gruppen aufweisende Verbindungen, die Etherbindungen enthalten und ein Molekulargewicht von etwa 200 bis etwa 8000, vorzugsweise von etwa 1000 bis etwa 5000 aufweisen. Geeignete Polyetherpolyole können leicht durch Polymerisation von cyclischen Ethern wie Tetrahydrofuran oder durch Umsetzung von einem oder mehr Alkylenoxiden mit 2 bis etwa 4 C-Atomen im Alkylenrest mit einem Startermolekül, das zwei aktive Wasserstoffatome im Alkylrest aufweist, hergestellt werden. Geeignete Alkylenoxide sind beispielsweise Ethylenoxid, 1,2-Propylenoxid, Epichlorhydrin oder 1,2- oder 2,3-Butylenoxid. Die entsprechenden Alkylenoxide können einzeln, alternierend nacheinander, oder als Gemisch aus zwei oder mehr davon eingesetzt werden. Als Startermolekül kommen beispielsweise die bereits oben genannten Diole in Betracht. Besonders geeignet sind jedoch Wasser, Glykole wie Ethylenglykol, Propylenglykol, 1,4-Butandiol oder 1,6-Hexandiol, Amine, wie Ethylendiamin, Hexamethylendiamin oder 4,4'-Diaminodiphenylmethan oder Aminoalkohole wie Diethanolamin. Die genannten Startermoleküle können im Rahmen der Herstellung eines zum Einsatz als Komponente A geeigneten Polyetherpolyols alleine, oder als Gemisch aus zwei oder mehr davon eingesetzt werden. Die beschriebenen Polyetherpolyole können im Rahmen ihres Einsatzes als Komponente A einzeln, oder als Gemisch aus zwei oder mehr der genannten Polyetherpolyole eingesetzt werden.

Zum Einsatz als Komponente A geeignete Polycarbonate sind im wesentlichen linear und weisen durchschnittlich mindestens zwei, vorzugsweise endständige, OH-Gruppen auf. Die Herstellung entsprechender Polycarbonatpolyole erfolgt beispielsweise durch Umsetzung eines der oben genannten difunktionellen Alkohole, oder eines Gemischs aus zwei oder mehr solcher difunktioneller Alkohole mit Phosgen. Geeignete Polycarbonatpolyole, beispielsweise solche auf 1,6-Hexandiol Basis sowie deren Herstellung, werden beispielsweise in der US-A 4,131,731 beschriebenen.

Zum Einsatz als Komponente A geeignete Polylactone sind beispielsweise durch Homo- oder Mischpolymerisation von Lactonen, gegebenenfalls in Gegenwart eines geeigneten, difunktionellen Startermoleküls, erhältlich. Als Lactone kommen bevorzugt solche in Betracht, die sich von Verbindungen der allgemeinen Formel HO-(CH₂)i-COOH ableiten, wobei z für eine Zahl von 1 bis etwa 20 steht. Beispiele sind ε-Caprolacton, β-Propiolacton, γ-Butyrolacton oder Methyl-ε-caprolacton, oder Gemische aus zwei oder mehr davon. Im Rahmen der vorliegenden Erfindung bevorzugt eingesetzte Polylactone weisen ein Molekulargewicht von etwa 400 bis etwa 10.000, insbesondere etwa 800 bis etwa 8.000, beispielsweise etwa 1000 bis etwa 5000, auf

In einer bevorzugten Ausführungsform der Erfindung werden beispielsweise Polyester als Komponente A eingesetzt, die aus einer Umsetzung von Adipinsäure oder Isophthalsäure und/oder deren Gemisch mit 1,6-Hexandiol oder Cyclohexandimethanol oder deren Gemisch erhältlich sind. Entsprechende Polyester werden beispielsweise unter dem Namen "Lupraphen" von der Firma BASF vertrieben. Geeignete Typen sind beispielsweise Lupraphen AC 2000, Lupraphen ACI 1500, Lupraphen ACI 800, Lupraphen AC 1000, Lupraphen AC 800 oder Lupraphen VP 9184. Geeignete Polycarbonate werden beispielsweise unter dem Namen Desmophen 2020 von der Firma Bayer vertrieben.

In einer bevorzugten Ausführungsform der Erfindung werden als Komponente B Verbindungen eingesetzt, die mindestens zwei gegenüber Isocyanaten unter Ausbildung einer kovalenten Bindung reaktionsfähige funktionelle Gruppen aufweisen. In einer bevorzugten Ausführungsform der Erfindung werden als Komponente B difunktionelle Alkohole eingesetzt. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können. In einer bevorzugten Ausführungsform der vorliegenden Erfindung werden als Komponente B Verbindungen eingesetzt, die ein Molekulargewicht von weniger als etwa 200 g/mol, insbesondere weniger als etwa 150 g/mol aufweisen. Besonders geeignet sind in diesem Zusammenhang die niedermolekularen aliphatische difunktionellen Alkohole, beispielsweise Ethylenglykol, Propylenglykol, Butylenglykol oder Neopentylglykol und dergleichen kurzkettige aliphatische, lineare oder verzweigte Verbindungen.

Als Komponente C werden im Rahmen der vorliegenden Erfindung Polyisocyanate eingesetzt, die durchschnittlich mindestens etwa 2 Isocyanatgruppen pro Molekül aufweisen, vorzugsweise handelt es sich dabei um Diisocyanate. Geeignete Diisocyanate weisen in einer bevorzugten Ausführungsform der vorliegenden Erfindung etwa 6 bis etwa 30 C-Atome auf. In einer bevorzugten Ausführungsform der Erfindung werden beispielsweise lineare aliphatische Diisocyanate wie 1,4-Tetramethylendiisocyanat, 1,5-Pentamethylendiisocyanat oder 1,6-Hexamethylendiisocyanat, aliphatische cyclische Diisocyanate wie 1,4-Cyclohexylendiisocyanat, Dicyclohexylmethandiisocyanat oder Isophorondiisocyanat (IPDI) eingesetzt. Weiterhin im Rahmen der vorliegenden Erfindung als Diisocyanate geeignet sind aromatische Diisocyanate wie Toluylen-2,4-diisocyanat (2,4-TDI), Toluylen-2,6-Diisocyanat (2,6-TDI), das Isomerengemisch der beiden letztgenannten Diisocyanate, m-Tetramethylxylylendiisocyanat (TMXDI), p-Tetramethylxylylendiisocyanat, 1,5-Naphthylendiisocyanat, 1,5-Tetrahydronaphthylendiisocyanat 2,2'-Diphenylmethandiisocyanat, 2,4'-Diphenylmethandiisocyanat und 4,4'-Diphenylmethandiisocyanat sowie Gemische aus zwei oder mehr der genannten Diisocyanate. In einer bevorzugten Ausführungsform der Erfindung werden Diisocyanate eingesetzt, die einen aromatischen Molekülbestandteil aufweisen.

Gegebenenfalls können in untergeordneten Mengen von bis zu etwa 5 Gew.-%, bezogen auf die Gesamtmenge der als Komponente C eingesetzten Diisocyanate, Isocyanate mit einer Funktionalität von mehr als 2 eingesetzt werden. Zu diesem Zweck geeignete Isocyanate sind beispielsweise die Trimerisierungsprodukte von difunktionellen Isocyanaten wie 1,4-Butylendiisocyanat, 1,5-Pentamethylendiisocyanat oder 1,6-Hexamethylendiisocyanat.

Als Komponente D werden im Rahmen der vorliegenden Erfindung mindestens die bereits oben beschriebenen Verbindungen der allgemeinen Formel II eingesetzt. Es ist im Rahmen der vorliegenden Erfindung jedoch möglich, daß zusätzlich zu den Verbindungen der allgemeinen Formel II gegebenenfalls noch weitere Verbindungen mit in das Polyurethan eingebaut werden können, die eine oder mehrere ionische oder die ionisierbare Gruppen aufweisen. Geeignete ionische oder ionisierbare Gruppen sind die Carbonsäuregruppen, die Phosphonsäuregruppe und die Sulfonsäuregruppe sowie deren Salze, oder Gemische aus 2 oder mehr davon, beispielsweise Dimethylolpropionsäure.

In einer bevorzugten Ausführungsform der vorliegenden Erfindung werden bei der Herstellung der erfindungsgemäßen Bindemittelzusammensetzung Polyurethane eingesetzt, deren Anteil an ionischen oder ionisierbaren Gruppen entweder ausschließlich auf den Einsatz einer Verbindung der allgemeinen Formel II zurückzuführen ist oder bei deren Herstellung eine Verbindung der allgemeinen Formel II zusammen mit einer geeigneten eine oder mehrere Carbonsäuregruppen, eine oder mehrere Sulfonsäuregruppen oder eine oder mehrere Phosphonsäuregruppe oder deren Salze tragenden Verbindungen verwendet wurden.

Als entsprechende Phosphonsäuregruppen tragende Verbindungen eignen sich beispielsweise die in der DE-A 42 41 506 beschriebenen Verbindungen. Entsprechende Sulfonsäuregruppen tragende Verbindungen werden beispielsweise in der DE-A 40 39 749 beschrieben.

Verbindungen der Komponente E bewirken eine Verzweigung der Polyurethanmoleküle und werden daher im Rahmen der vorliegenden Erfindung bei deren Herstellung nur in untergeordneten Mengen eingesetzt. In Mengen von bis zu etwa 5 Gew.-%, bezogen auf die gesamte Masse der im thermoplastischen Polyurethan enthaltenen Verbindungen der Komponente B, können daher als Komponente E beispielsweise aliphatische Alkohole mit drei oder mehr funktionellen Gruppen und 3 bis etwa 15, vorzugsweise etwa 3 bis etwa 10 C-Atomen bei der Herstellung der Polyurethane eingesetzt werden. Entsprechend geeignete Verbindungen sind beispielsweise Trimethylolpropan, Triethylolpropan, Glyzerin, Pentaerythrit, Sorbit, Mannit und weitere Zuckeralkohole mit bis zu etwa 10 OH-Gruppen pro Molekül. Ebenfalls zur Herstellung der Polyurethane einsetzbar sind die entsprechenden Derivate der genannten Verbindungen, wie sie sich durch Umsetzung mit einem Alkylenoxid mit 2 bis etwa 4 C-Atomen, oder einem Gemisch aus zwei oder mehr solcher Alkylenoxide erhalten lassen. Die genannten Verbindungen sind jeweils alleine, oder auch als Gemische aus zwei oder mehr der genannten Verbindungen einsetzbar.

Gegebenenfalls können bei der Umsetzung zu den im Rahmen der erfindungsgemäßen Bindemittelzusammensetzungen einsetzbaren Polyurethanen als Komponente F noch weitere, niedermolekulare Verbindungen vorliegen. Solche Verbindungen können beispielsweise als Kettenverlängerer wirken. Hierzu geeignet sind beispielsweise primäre Aminoverbindungen mit zwei bis etwa 20, beispielsweise 2 bis etwa 12 C-Atomen. Beispielsweise sind dies Ethylamin, n-Propylamin, i-Propylamin, sek.-Propylamin, tert.-Butylamin, 1-Aminoisobutan, substituierte Amine mit zwei bis etwa 20 C-Atomen wie 2-(N,N-Dimethylamino)-l-aminoethan, Aminomercaptane wie 1-Amino-2-mercaptoethan, aliphatische Aminoalkohole mit 2 bis etwa 20, vorzugsweise 2 bis etwa 12 C-Atomen, beispielsweise Ethanolamin, 1-Amino-3,3-dimethyl-pentan-5-ol, 2-Aminohexan, Diethanolamin, 1-Amino-2,5-dimethylcyclohexan-4-ol, 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, aromatisch-aliphatische oder aromatisch-cycloaliphatische Aminoalkohole mit 6 bis etwa 20 C-Atomen, wobei als aromatische Strukturen heterocyclische Ringsysteme oder vorzugsweise isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol in Betracht kommen, sowie Gemische aus zwei oder mehr solcher Verbindungen.

Die Umsetzung kann gegebenenfalls in Gegenwart eines Katalysators vorgenommen werden. In einer bevorzugten Ausführungsform handelte es sich dabei beispielsweise um ein tertiäres Amin wie Triethylamin, Tributylamin, Diazabicyclo(2,2,2)octan, N-Methylpyridin oder N-Methylmorpholin. Weitere geeignete Katalysatoren sind metallorganische Verbindungen wie Dibutylzinndilaurat und Metallsalze wie Zinnoctoat, Bleioctoat oder Zinkstearat. Die während der Reaktionen vorliegende Katalysatormenge beträgt im Allgemeinen etwa 1 bis etwa 500 Gew.-ppm.

Bei der Herstellung der im Rahmen der erfindungsgemäßen Bindemittelzusammensetzung einzusetzenden Polyurethane können die Komponenten A bis D und gegebenenfalls E oder F oder deren Gemisch, in üblicher Weise miteinander umgesetzt werden. Die Umsetzung kann beispielsweise in einem einstufigen oder in einem mehrstufigen Verfahren durchgeführt werden. Wird die Umsetzung in einem einstufigen Verfahren durchgeführt, so werden die bei der Umsetzung gewünschten Komponenten gleichzeitig oder nacheinander in einem entsprechenden Reaktionsgefäß vorgelegt und anschließend die Polyadditionsreaktion in Gang gesetzt. Im Rahmen einer bevorzugten Ausführungsform der Erfindung werden die entsprechenden Polyurethane jedoch in einem mehrstufigen Verfahren, insbesondere in einem 2-Stufenverfahren hergestellt. Zur Durchführung des 2-Stufenverfahrens werden alle Ausgangskomponenten A bis D sowie gegebenenfalls E oder F oder deren Gemisch in einem Teil eines Lösemittels gelöst, so daß Lösungen mit einem Feststoffgehalt von etwa 15 bis etwa 50 Gew.-% gebildet werden. Anschließend werden die Lösungen unter Rühren auf Temperaturen von 20 bis etwa 90 °C, vorzugsweise von etwa 30 bis etwa 70 °C, gegebenenfalls nach Zugabe eines Katalysators, erwärmt. Anschließend werden die Komponenten bis zum gewünschten NCO-Gehalt umgesetzt.

Alternativ dazu kann auch Komponente C in etwas Lösemittel vorgelegt und anschließend die entsprechend gewünschten Bausteine sowie gegebenenfalls der Katalysator und die Hilfs- und Zusatzstoffe bei Temperaturen von etwa 20 bis etwa 90 °C, vorzugsweise bei etwa 30 bis etwa 70 °C, innerhalb eines Zeitraums von etwa 0,2 bis etwa 5 Stunden zugegeben werden. Die Komponenten werden bis zum gewünschten NCO-Gehalt umgesetzt.

Die Mitverwendung eines Löse- oder Verdünnungsmittels ist in der Regel nicht erforderlich. Im Rahmen einer bevorzugten Ausführungsform wird jedoch ein Lösemittel, oder ein Gemisch aus zwei oder mehr Lösemitteln eingesetzt. Geeignete Lösemittel sind beispielsweise Kohlenwasserstoffe, insbesondere Toluol, Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dimethylsulfoxid, Ether, insbesondere Diisopropylether oder Methyltert.-butylether oder bevorzugt cyclische Ether, insbesondere Tetrahydrofuran oder Dioxan.

Im Rahmen einer bevorzugten Ausführungsform der vorliegenden Erfindung weist die erfindungsgemäße Bindemittelzusammensetzung als Polyurethan mindestens ein thermoplastisches Blockcopolyurethan auf.

Unter einem thermoplastischen Blockcopolyurethan wird im Rahmen der vorliegenden Erfindung ein Polyurethan verstanden, das mindestens eine Ankergruppe L und einen blockweisen Aufbau aufweist, bei dem sich Hartsegmente B und Weichsegmente A in der Form ^{···}-A-B-A-B-A-^{···} abwechseln. Ein thermoplastisches Blockcopolyurethan kann beispielsweise einen Aufbau gemäß der Struktur A-B-A aufweisen, wobei diese einzelnen Blöcke mikrophasensepariert vorliegen. Bei einer bestimmten Temperatur oder innerhalb eines bestimmten Temperaturbereichs weist das thermoplastische Blockcopolyurethan einen Erweichungspunkt oder einen Erweichungsbereich auf. Oberhalb dieses Erweichungspunktes oder -bereichs ist das Polyurethan plastisch verformbar, wobei es bei einer Rückkehr zu Temperaturen unterhalb dieses Erweichungspunktes oder -bereichs die im plastischen Zustand hergestellte Form behält und sich im wesentlichen wie ein Duromeres verhält.

Unter einem Hartsegment (B) wird im Rahmen der vorliegenden Erfindung ein Segment eines thermoplastischen Blockcopolyurethanmoleküls verstanden, wobei das Hartsegment eine Glasübergangstemperatur oberhalb von mindestens etwa 20 bis 40 °C, vorzugsweise von mindestens etwa 50 °C, aufweist.

Unter einem Weichsegment (A) wird im Rahmen der vorliegenden Erfindung ein Segment eines Polyurethanmoleküls verstanden, das kovalent mit einem Hartsegment verbunden ist und eine Glasübergangstemperatur von weniger als etwa 20 °C aufweist.

Die entsprechenden Weichsegmente A und Hartsegmente B tragen, wie im nachfolgenden Text detailliert dargelegt wird, mindestens eine Ankergruppe L, die aus einem Strukturelement der allgemeinen Formel I stammt. Der Übersichtlichkeit halber wird im nachfolgenden Text, insbesondere in den A und B enthaltenden Formeln, jedoch auf eine Darstellung der Ankergruppen L verzichtet.

Unter einer Ankergruppe L wird im Rahmen der vorliegenden Erfindung grundsätzlich jede funktionelle Gruppe verstanden, die zu Wechselwirkungen mit ionischen oder nichtionischen, polaren Verbindungen in der Lage ist. Insbesondere werden unter Ankergruppen solche funktionellen Gruppen verstanden, die Wechselwirkungen mit der Oberfläche von anorganischen Füllstoffmaterialien, insbesondere mit der Oberfläche von anorganischen magnetischen oder magnetisierbaren Pigmenten einzugehen in der Lage sind. Gemäß der vorliegenden Erfindung enthält ein in einem erfindungsgemäßen magnetischen Aufzeichnungsmedium einsetzbares thermoplastisches Blockcopolyurethan mindestens eine Sulfonsäuregruppe als Ankergruppe, die sich innerhalb einer Struktureinheit der allgemeinen Formel I befindet.

Im nachfolgenden Text werden der Einfachheit halber die im Rahmen des vorliegenden Textes beschriebenen thermoplastischen Blockcopolyurethane als "thermoplastische Polyurethane" oder einfach als "Polyurethane" bezeichnet. Polyurethane, die keine thermoplastischen Eigenschaften aufweisen oder keine Blockcopolymere sind werden nachfolgend ausdrücklich als solche gekennzeichnet.

Das erfindungsgemäße Polyurethan kann sowohl nur in einem Weichsegment oder mehreren Weichsegmenten A als auch nur in einem Hartsegment oder in mehreren Hartsegmenten B Ankergruppen L aufweisen. Es ist jedoch im Rahmen der vorliegenden Erfindung ebenso möglich thermoplastische Polyurethane einzusetzen, die sowohl in einem oder mehreren Weichsegmenten A als auch in einem oder mehreren Hartsegmenten B Ankergruppen L aufweisen. Die Zahl der Ankergruppen im Weichsegment oder den Weichsegmenten A kann dabei größer sein als die Zahl der Ankergruppen im Hartsegment oder den Hartsegmenten B, beispielsweise kann das Verhältnis der Ankergruppen in den Weichsegmenten A zu der Zahl der Ankergruppen in den Hartsegmenten B etwa 1000 : 1 bis etwa 100 : 1, oder weniger, beispielsweise etwa 10 : 1 oder etwa 1,5 : 1 betragen. Im umgekehrten Fall kann das Verhältnis der Ankergruppen in den Hartsegmenten B zu der Zahl der Ankergruppen in den Weichsegmenten A ebenfalls etwa 1000 : 1 bis etwa 100 : 1, oder weniger, beispielsweise etwa 10 : 1 oder etwa 1,5 : 1 betragen.

In einer bevorzugten Ausführungsform der Erfindung ist die Zahl der Ankergruppen die sich in einem Hartsegment des thermoplastischen Polyurethans befinden größer als die Zahl der Ankergruppen die sich in einem Weichsegment (A) oder mehreren Weichsegmenten (A) befinden. In einer bevorzugten Ausführungsform der Erfindung ist die Zahl der Ankergruppen die sich in der Gesamtzahl der im Polyurethan befindlichen Hartsegmente (B) befinden mindestens fünfmal so groß, vorzugsweise mindestens 10 mal so groß, wie die Gesamtzahl der Ankergruppen in den Weichsegmenten (A). In einer weiteren bevorzugten Ausführungsform der Erfindung weist das erfindungsgemäße thermoplastische Polyurethan im wesentlichen keine Ankergruppen im Weichsegment (A) oder den Weichsegmenten (A) auf.

Gemäß dem Grundprinzip der vorliegenden Erfindung enthält das magnetische Aufzeichnungsmedium mindestens ein Polyurethan, das eine Struktureinheit gemäß der allgemeinen Formel I aufweist. Thermoplastische Blockcopolyurethane, wie sie im Rahmen der vorliegenden Erfindung eingesetzt werden können, enthalten daher mindestens eine Sulfonsäuregruppe als Ankergruppe L. Gemäß den oben gemachten Ausführungen kann diese Sulfonsäuregruppe sowohl in einem Weichsegment A als auch in einem Hartsegment B angeordnet sein. Darüber hinaus kann ein im Rahmen des erfindungsgemäßen magnetischen Aufzeichnungsmediums einsetzbares thermoplastisches Blockcopolyurethan jedoch auch noch weitere Ankergruppen aufweisen, die nicht aus einer Struktureinheit gemäß der allgemeinen Formel I stammen.

In einer weiteren Ausführungsform der Erfindung enthält das erfindungsgemäße Polyurethan daher zusätzlich zu der bereits genannten Ankergruppe L als weitere Ankergruppe L eine Carboxylgruppe, eine Sulfonsäuregruppe, eine Phosphonsäuregruppe, eine Phosphorsäuregruppe oder ein geeignetes Salz einer solche Gruppe oder eine quaternäre Aminogruppe oder Derivate der genannten Gruppen, beispielsweise deren Ester oder ein primäres, sekundäres oder tertiäres Aminosalz oder zwei oder mehr der jeweils genannten Ankergruppen oder ein Gemisch aus zwei oder mehr der genannten Ankergruppen.

In einer bevorzugten Ausführungsform der vorliegenden Erfindung enthält das magnetische Aufzeichnungsmedium ein thermoplastisches Polyurethan der allgemeinen Formel V

P-(A-B-A-)ₙP (V),

oder ein Polyurethan der allgemeinen Formel VI

P-(A-B-A-V¹-)ₙ-A-B-A-P (VI),

wobei A und B die oben genannte Bedeutung haben, V¹ für den Rest einer gegenüber P unter Ausbildung einer kovalenten Bindung mindestens difunktionellen Verbindung G-V-G nach Bindungsschluß mit P, P für eine gegenüber den funktionellen Gruppen G der Verbindung V unter Ausbildung einer kovalenten Bindung reaktive funktionelle Gruppe, G für mindestens eine gegenüber den funktionellen Gruppen P unter Ausbildung einer kovalenten Bindung reaktive funktionelle Gruppe und n für eine Zahl von 1 bis 10 steht.

Ein solches thermoplastisches Blockcopolyurethan enthält mindestens eine Sorte Weichsegment A. Es ist im Rahmen der vorliegenden Erfindung jedoch ebensogut möglich, daß das thermoplastische Polyurethan zwei oder mehr verschiedene Sorten von Weichsegmenten A enthält. Bei den zwei oder mehr verschiedenen Sorten von Weichsegmenten A kann es sich beispielsweise um chemisch identische Weichsegmente handeln, das heißt, um Weichsegmente, die einen im wesentlichen identischen chemischen Aufbau aufweisen, sich jedoch beispielsweise im Molekulargewicht unterscheiden. Es ist jedoch im Rahmen der vorliegenden Erfindung ebensogut möglich, daß zwei oder mehr chemisch unterschiedliche Weichsegmente A eingesetzt werden. So kann ein im Rahmen eines erfindungsgemäßen Bindemittels eingesetztes thermoplastisches Polyurethan beispielsweise einen Polyester und einen Polyether als Weichsegmente A aufweisen.

Grundsätzlich eignen sich als Weichsegmente A beispielsweise Polyester, Polyether, Polyacetale, Polycarbonate, Polyesterether, und dergleichen.

Die genannten, zum Einsatz als Weichsegmente A geeigneten Verbindungen weisen mindestens eine funktionelle Gruppe P auf. In einer bevorzugten Ausführungsform der Erfindung weisen die als Weichsegmente A geeigneten Verbindungen mindestens zwei funktionelle Gruppen P auf. In einer weiteren bevorzugten Ausführungsform der Erfindung sind die funktionellen Gruppen P endständig an den zum Einsatz als Weichsegment A geeigneten Verbindungen angebracht.

Grundsätzlich steht P für eine funktionelle Gruppe, die zur Reaktion mit einer NCO-Gruppe unter Ausbildung einer kovalenten Bindung fähig ist. In einer bevorzugten Ausführungsform der Erfindung steht P für OH, NH₂, NHR³, SH oder COOH, wobei R³ die bereits oben genannte Bedeutung aufweist.

In einer weiteren bevorzugten Ausführungsform der Erfindung steht P für eine OH-, NH₂- oder NHR³-Gruppe, insbesondere für eine OH-Gruppe. Im weiteren Verlauf des Textes werden zur Herstellung von Weichsegmenten A geeignete Verbindungen beschrieben. Der Übersichtlichkeit halber werden die Verbindungen, soweit nichts anderes angegeben ist, als OH-Gruppen tragende Verbindungen dargestellt. Es ist jedoch im Rahmen der vorliegenden Erfindung ebensogut möglich, entsprechende Verbindungen einzusetzen, die anstatt der in der weiteren Beschreibung dargestellten OH-Gruppe eine andere gegenüber NCO-Gruppen reaktive funktionelle Gruppe, beispielsweise eine der anderen für P genannten funktionellen Gruppen tragen, soweit eine entsprechende Verbindung existiert oder herstellbar ist.

Zur Bildung von Weichsegmenten geeignete Polyester sind beispielsweise überwiegend lineare Polymere mit endständigen OH-Gruppen, bevorzugt solche mit zwei oder drei, insbesondere mit zwei OH-Endgruppen. Die Polyesterpolyole lassen sich in einfacher Weise durch Veresterung von linearen oder verzweigten, gesättigten oder ungesättigten aliphatischen oder entsprechend geeigneten aromatischen Dicarbonsäuren mit 4 bis etwa 15 C-Atomen, vorzugsweise 4 bis etwa 10 C-Atomen mit Glykolen, bevorzugt Glykolen mit etwa 2 bis etwa 25 C-Atomen oder durch Polymerisation von Lactonen mit etwa 3 bis etwa 20 C-Atomen herstellen. Als Dicarbonsäuren lassen sich beispielsweise die bereits oben genannten Dicarbonsäuren einsetzen.

Zur Herstellung der Polyesterpolyole kann es gegebenenfalls vorteilhaft sein, anstelle der Dicarbonsäuren entsprechende Säurederivate wie Carbonsäureanhydride oder Carbonsäurechloride zu verwenden, sofern diese erhältlich sind.

Die im Rahmen der vorliegenden Erfindung zum Einsatz als Weichsegment geeigneten Polyesterpolyole sind durch Umsetzung von Dicarbonsäuren mit entsprechenden Glykolen herstellbar. Grundsätzlich zur Herstellung der Polyesterpolyole geeignete Glykole sind lineare oder verzweigte, gesättigte oder ungesättigte, aliphatische oder aromatische Glykole, wie sie bereits oben im Rahmen des vorliegenden Textes genannt wurden.

In einer bevorzugten Ausführungsform der Erfindung werden als Polyurethane thermoplastische Blockcopolyurethane eingesetzt, bei deren Herstellung im Weichsegment A 1,2-Ethandiol, 1,3-Propandiol, 2-Methyl-1,3-propandiol, 1,4-Butandiol, 1,6-Hexandiol, 2,2-Dimethylpropandiol-1,3, 1,4-Dimethylolcyclohexan, 1,4-Diethanolcyclohexan und ethoxylierte oder propoxylierte Produkte des 2,2-Bis-(4-hydroxyphenylen)-propan (Bisphenol A) eingesetzt wurden. Je nach den gewünschten Eigenschaften der mit den entsprechenden Weichsegmenten ausgestatteten thermoplastischen Polyurethane können die genannten Polyesterpolyole alleine oder als Mischung von zwei oder mehr der genannten Polyesterpolyole in verschiedenen Mengenverhältnissen zur Herstellung der thermoplastischen Polyurethane eingesetzt werden. Als Lactone für die Herstellung der Polyesterpolyole eignen sich z. B. α,α-Dimethyl-γ-propiolacton, β-Butyrolacton und ε-Caprolacton.

Ebenfalls zum Einsatz als Weichsegmente A bei der Herstellung der oben genannten thermoplastischen Polyurethane geeignet sind die Polyetherpolyole. Unter Polyetherpolyolen werden im wesentlichen lineare, im Sinne des oben gesagten endständige OH-Gruppen aufweisende Substanzen mit Etherbindungen verstanden. Geeignete Polyetherpolyole können beispielsweise durch Polymerisation von cyclischen Ethern wie Tetrahydrofuran oder durch Umsetzung von einem oder mehreren Alkylenoxiden mit 2 bis 4 C-Atomen im Alkylenrest mit einem Startermolekül, das zwei aktive Wasserstoffatome aufweist, hergestellt werden. Als Alkylenoxide eignen sich beispielsweise Ethylenoxid, 1,2-Propylenoxid, Epichlorhydrin, 1,2-Butylenoxid oder 2,3-Butylenoxid, oder Gemische aus zwei oder mehr davon.

Die Alkylenoxide können einzeln, alternierend nacheinander oder als Gemische aus zwei oder mehr der genannten Alkylenoxide verwendet werden. Als Startermolekül kommen beispielsweise Wasser, Glykole wie Ethylenglykol, Propylenglykol, 1,4-Butandiol, 1,5-Pentandiol und 1,6-Hexandiol, Amine wie Ethylendiamin, 1,6-Hexamethylendiamin oder 4,4'-Diaminodiphenylmethan sowie Aminoalkohole wie Methylethanolamin in Betracht. Grundsätzlich sind jedoch alle oben genannten, mindestens difunktionellen Verbindungen, wie sie zum Aufbau der Weichsegmente beschrieben wurden, als Startermoleküle einsetzbar. Geeignete Polyesterpolyole und Polyetherpolyole sowie deren Herstellung nennt beispielsweise die EP-B 0 416 386.

Im Rahmen der vorliegenden Erfindung können als Weichsegmente A beispielsweise auch Polycarbonate, wie sie bereits oben genannt wurden, eingesetzt werden.

In Mengen von bis zu etwa 5 Gew.-%, bezogen auf die gesamte Masse der im thermoplastischen Polyurethan enthaltenen Weichsegmente, können beispielsweise auch aliphatische Alkohole mit drei oder mehr funktionellen Gruppen und 3 bis etwa 15, vorzugsweise etwa 3 bis etwa 10 C-Atomen bei der Herstellung der Weichsegmente eingesetzt werden. Entsprechend geeignete Verbindungen wurden im Rahmen des vorliegenden Textes bereits oben genannt.

In einer bevorzugten Ausführungsform der Erfindung werden beispielsweise Polyester als Weichsegment (A) eingesetzt, die aus einer Umsetzung von Adipinsäure oder Isophthalsäure und/oder deren Gemisch mit 1,6-Hexandiol oder Cyclohexandimethanol oder deren Gemisch erhältlich sind.

In einer bevorzugten Ausführungsform der Erfindung weisen die Weichsegmente (A) Glasübergangstemperaturen von etwa -50 °C bis etwa 20 °C auf. In einer weiteren bevorzugten Ausführungsform der Erfindung liegen die Glasübergangstemperaturen der Weichsegmente (A) in einem Bereich von etwa -30 °C bis etwa 0 °C. Um die gewünschten mechanischen Eigenschaften des erfindungsgemäßen thermoplastischen Polyurethans zu gewährleisten, sollte das Weichsegment (A) ein Molekulargewicht von etwa 500 bis etwa 25.000 g/mol aufweisen. In einer bevorzugten Ausführungsform der Erfindung werden Weichsegmente (A) eingesetzt, die ein Molekulargewicht von etwa 2000 bis etwa 10.000 g/mol, beispielsweise etwa 3000 bis etwa 7000 g/mol aufweisen.

Zum Einsatz als Weichsegmente (A) geeignete Verbindungen der vorgenannten Verbindungsklassen können bereits in einem zum Einsatz als Weichsegment (A) geeigneten Molekulargewichtsbereich vorliegen. Es ist jedoch ebensogut möglich, Verbindungen der oben genannten Verbindungsklassen zur Herstellung von Weichsegmenten (A) einzusetzen, die ein Molekulargewicht aufweisen, das unterhalb des zum Einsatz als Weichsegment (A) geeigneten Molekulargewichts oder gewünschten Molekulargewichts liegt. In diesem Fall ist es im Rahmen der vorliegenden Erfindung möglich, solche Verbindungen der oben genannten Verbindungsklassen durch Umsetzung mit entsprechenden difunktionellen Verbindungen bis zum Erreichen des erforderlichen oder gewünschten Molekulargewichts zu verlängern. In Abhängigkeit von der Endgruppe P eignen sich hierzu beispielsweise Dicarbonsäuren, difunktionelle Epoxyverbindungen oder Diisocyanate, wobei in einer bevorzugten Ausführungsform der vorliegenden Erfindung Diisocyanate eingesetzt werden.

Grundsätzlich werden zur oben genannten Molekulargewichtserhöhung solche di- oder höherfunktionellen Verbindungen eingesetzt, die zu einer Glasübergangstemperatur des verlängerten Weichsegments (A) führen, die innerhalb des gewünschten Bereichs liegt. In einer bevorzugten Ausführungsform der Erfindung werden daher im genannten Fall Verbindungen zur Molekulargewichtserhöhung bei der Herstellung der Weichsegmente (A) Diisocyanate, insbesondere beispielsweise solche mit 6 bis etwa 30 C-Atomen eingesetzt, wie sie bereits oben im Rahmen dieses Textes genannt wurden. In einer bevorzugten Ausführungsform der Erfindung werden Diisocyanate eingesetzt, die einen aromatischen Molekülbestandteil aufweisen.

Die Weichsegmente (A) können eine oder mehrere Ankergruppen L tragen. Die Herstellung von Weichsegmenten (A) mit Ankergruppen L erfolgt nach den üblichen Regeln der organischen Chemie, beispielsweise wie im weiteren Verlauf des Textes im Rahmen der Herstellung der Ankergruppen tragenden Hartsegmente (B) beschrieben.

Zur Herstellung der Hartsegmente B werden Diisocyanate mit gegenüber Isocyanatgruppen difunktionellen Verbindungen umgesetzt. Die Auswahl von Diisocyanaten und entsprechenden gegenüber Isocyanatgruppen difunktionellen Verbindungen wird dabei derart vorgenommen, daß das entsprechende Hartsegment eine Glasübergangstemperatur wie eingangs definiert aufweist, wobei wiederum die vorstehend bezüglich der Weichsegmente genannten Isocyanate bevorzugt werden.

Gegebenenfalls können in untergeordneten Mengen von bis zu etwa 5 Gew.-%, bezogen auf die Gesamtmenge der zur Herstellung des Hartsegments (B) eingesetzten Diisocyanate Isocyanate mit einer Funktionalität von mehr als 2 eingesetzt werden. Zu diesem Zweck geeignete Isocyanate sind beispielsweise die Trimerisierungsprodukte von difunktionellen Isocyanaten wie 1,4-Butylendiisocyanat, 1,5-Pentamethylendiisocyanat oder 1,6-Hexamethylendiisocyanat.

Als difunktionelle Verbindungen zur Herstellung der Hartsegmente B werden vorzugsweise Verbindungen eingesetzt, die mindestens zwei gegenüber Isocyanaten unter Ausbildung einer kovalenten Bindung reaktionsfähige funktionelle Gruppen aufweisen. Geeignete funktionelle Gruppen sind beispielsweise diejenigen, wie sie bereits oben im Rahmen der Erläuterung der funktionellen Gruppen P genannt wurden. In einer bevorzugten Ausführungsform der Erfindung werden zur Herstellung der Hartsegmente B difunktionelle Alkohole eingesetzt. Beispielsweise sind dies Diethylenglykol, 1,2-Ethandiol, 1,3-Propandiol, 2-Methyl-1,3-propandiol, 1,4-Butandiol, 1,5-Pentandiol, 1,6-Hexandiol, 1,7-Heptandiol, 1,8-Octandiol, 1,9-Nonandiol, 1,10-Decandiol sowie die entsprechenden höheren Homologen, wie sie sich durch schrittweise Verlängerung der Kohlenstoffkette der genannten Verbindungen bilden lassen sowie beispielsweise 2,2,4-Trimethylpentandiol-1,5, 2,2-Dimethylpropandiol-1,3, 1,4-Dimethylolcyclohexan, 1,4-Diethanolcyclohexan, 2-Methyl-2-butyl-1,3-propandiol, 2,2-Dimethyl-1,4-butandiol, 1,4-Dimethylolcyclohexan, Hydroxypivalinsäureneopentylglykolester, Diethylenglykol, Triethylenglykol, Methyldiethanolamin oder aromatisch-aliphatische oder aromatisch-cycloaliphatische Diole mit 8 bis etwa 30 C-Atomen, wobei als aromatische Strukturen heterocyclische Ringsysteme oder vorzugsweise isocyclische Ringsysteme wie Naphthalin- oder insbesondere Benzolderivate wie Bisphenol A eingesetzt werden können. In einer bevorzugten Ausführungsform der vorliegenden Erfindung werden zur Herstellung der Hartsegmente B Verbindungen eingesetzt, die ein Molekulargewicht von weniger als etwa 200 g/mol, insbesondere weniger als etwa 150 g/mol aufweisen. Besonders geeignet sind in diesem Zusammenhang die niedermolekularen aliphatische difunktionellen Alkohole, beispielsweise Ethylenglykol, Propylenglykol, Butylenglykol, Neopentylglykol, Neodiol (2-Butyl-2-ethyl-1,3-propandiol) und dergleichen kurzkettige aliphatische, lineare oder verzweigte Verbindungen.

Eine Möglichkeit zur Ausstattung der thermoplastischen Blockcopolyurethane mit Ankergruppen L besteht darin, daß eine Verbindung der allgemeinen Formel II bereits beim Aufbau des thermoplastischen Polyurethans eingesetzt wird und diese somit bereits während der Synthese des thermoplastischen Polyurethans in das thermoplastische Polyurethan eingebaut wird.

Während dieser Reaktion können jedoch auch noch weitere Verbindungen in das thermoplastische Polyurethan eingebaut werden, die ebenfalls zum Einbau von Ankergruppen L geeignet sind. Solche Verbindungen weisen mindestens zwei gegenüber einer Isocyanatgruppe unter Ausbildung einer kovalenten Bindung reaktionsfähige funktionelle Gruppen, beispielsweise die bereits genannten funktionellen Gruppen P auf. Entsprechend geeignete Verbindungen sind beispielsweise Dimethylolpropionsäure oder weitere mit Isocyanaten reaktionsfähige difunktionelle Verbindungen mit einer mit anorganischen Oberflächen, beispielsweise Pigmentoberflächen, wechselwirkenden Gruppe wie -SO₃Na, beispielsweise das früher durch die Fa. Goldschmidt vertriebene Tegomer DS3135.

Die Zahl der Ankergruppen L pro Segment (Weichsegment B oder Hartsegment A) kann in weiten Grenzen variieren.

Entsprechend den Gegebenheiten bei der Polymersynthese muß der Parameter n nicht notwendigerweise für eine ganze Zahl stehen, da in der Regel bei Polymersynthesen Moleküle mit unterschiedlichen Molekulargewichten entstehen und damit die Zahl n für während der Polymersynthese entstehende Moleküle unterschiedlich sein kann. Der Parameter n drückt daher im vorliegenden Fall die durchschnittliche Zahl der Wiederholungseinheiten in der Gesamtheit der betrachteten Polymermoleküle aus.

In einer bevorzugten Ausführungsform der Erfindung weisen die Hartsegmente (B) Glasübergangstemperaturen von mehr als der Gebrauchstemperatur eines mit einer erfindungsgemäßen Bindemittelzusammensetzung hergestellten Magnetspeichermediums, beispielsweise etwa 20 °C bis etwa 90 °C auf. In einer weiteren bevorzugten Ausführungsform der Erfindung liegen die Glasübergangstemperaturen der Hartsegmente (B) in einem Bereich von etwa 30 °C bis etwa 80 °C, beispielsweise in einem Bereich von etwa 40 °C bis etwa 70 °C. Um die gewünschten mechanischen Eigenschaften des erfindungsgemäßen thermoplastischen Polyurethans zu gewährleisten, sollten die Hartsegmente (B) ein Molekulargewicht von etwa 350 bis etwa 30.000 g/mol aufweisen. In einer bevorzugten Ausführungsform der Erfindung werden Hartsegmente (B) eingesetzt, die ein Molekulargewicht von etwa 1.000 bis etwa 20.000 g/mol, beispielsweise etwa 2.000 bis etwa 15.000 g/mol oder etwa 3.000 bis etwa 12.000 g/mol aufweisen.

Die Herstellung der Weichsegmente (A) und der Hartsegmente (B) wird nach den üblichen Regeln der organischen Polymerchemie durchgeführt. Wenn als Weichsegment ein Polyester, ein Polyether, ein Polycarbonat, ein Polyacetal oder eine sonstige als Weichsegment einsetzbare Verbindung eingesetzt wird, so wird deren Herstellung nach üblichen, dem Fachmann bekannten Methoden der Polymerchemie durchgeführt. Sollen verschiedene der genannten, als Weichsegment einsetzbaren Verbindungen miteinander aufgrund eines zu geringen Molekulargewichts der einzelnen Verbindungen verbunden werden, so geschieht dies, in Abhängigkeit von der zur Kettenverlängerung verwendeten difunktionellen Verbindung, ebenfalls nach den üblichen, in der organischen Chemie bekannten Regeln für die jeweiligen funktionellen Gruppen.

Die Herstellung der Weichsegmente (A) wird so durchgeführt, daß ein Weichsegment (A) entsteht das mindestens zwei funktionelle Gruppen P aufweist, wobei eine Gruppe P zur Reaktion mit einer Isocyanatgruppe unter Ausbildung einer kovalenten Bindung fähig ist. Geeignete Gruppen P wurden bereits im Laufe dieses Textes genannt.

In einer bevorzugten Ausführungsform der Erfindung werden zur Herstellung der thermoplastischen Polyurethane Weichsegmente (A) eingesetzt, die als funktionelle Gruppen P OH-Gruppen tragen. Die Zahl der funktionellen Gruppen P pro Weichsegment sollte mindestens etwa zwei betragen. Es ist jedoch ebensogut möglich, Weichsegmente einzusetzen, deren Funktionalität höher als zwei ist, beispielsweise etwa 3. Es ist weiterhin möglich Gemische aus zwei oder mehr verschiedenen Weichsegmenten (A) einzusetzen, die sich beispielsweise in ihrer Funktionalität gegenüber Isocyanatgruppen unterscheiden. So ist es im Rahmen der vorliegenden Erfindung durchaus möglich, daß die eingesetzten Weichsegmente (A) eine Funktionalität gegenüber Isocyanatgruppen aufweisen die beispielsweise zwischen 2 und 3 liegt, beispielsweise etwa 2,1 bis etwa 2,5.

In einer bevorzugten Ausführungsform der Erfindung werden als Weichsegmente (A) Polyesterpolyole, Polyetherpolyole oder Polycarbonatpolyole eingesetzt, die gegebenenfalls mit Diisocyanaten, beispielsweise Diphenylmethandiisocyanat oder Toluylendiisocyanat bis zum Erreichen eines entsprechenden Molekulargewichts verlängert wurden, eingesetzt.

Die im Rahmen der vorliegenden Erfindung als Hartsegmente (B) eingesetzten Verbindungen werden im Rahmen einer bevorzugten Ausführungsform so hergestellt, daß nach der Herstellung als Hartsegmente einsetzbare Polyurethanpräpolymere mit mindestens zwei Isocyanatgruppen vorliegen. In einer bevorzugten Ausführungsform der Erfindung weisen die als Hartsegmente einsetzbaren Verbindungen mindestens zwei Isocyanatgruppen als endständige Isocyanatgruppen auf.

Die Herstellung der erfindungsgemäßen thermoplastischen Polyurethane erfolgt durch Umsetzung der als Weichsegmente (A) einsetzbaren Verbindungen mit den als Hartsegmente (B) einsetzbaren Verbindungen. Als Weichsegmente (A) einsetzbare Verbindungen weisen im Rahmen der vorliegenden Erfindung eine Struktur P-A-P auf, wobei P die oben angegebene Bedeutung hat und A für eine der oben beschriebenen, als Weichsegment (A) einsetzbaren Strukturen steht. Im Rahmen der vorliegenden Erfindung als Hartsegmente (B) einsetzbare Verbindungen weisen entsprechend eine Struktur OCN-B -NCO auf, und sind entsprechend gegenüber den die Weichsegmente bildenden Strukturen unter Bildung einer kovalenten Bindung reaktiv. Die angegebenen Strukturen stellen lediglich schematisch den Aufbau der miteinander umzusetzenden Verbindungen dar. Die Zahl der funktionellen Gruppen kann entsprechend dem oben gesagten von der strukturell dargestellten Form abweichen.

Die Umsetzung der Verbindungen P-A-P und OCN-B-NCO kann in an sich bekannter Weise vorgenommen werden, vorzugsweise bei Temperaturen von etwa 0 bis etwa 120 °C. Das Verhältnis der beiden Komponenten wird vorteilhafterweise so gewählt, daß das Verhältnis von P zu NCO-Gruppen etwa 2 bis etwa 1 beträgt. Den üblichen Regeln der Polymerchemie folgend läßt sich durch eine entsprechende Variation des genannten Verhältnisses das Molekulargewicht der erhaltenen thermoplastischen Polyurethane in weiten Grenzen steuern.

Mindestens eines der im erfindungsgemäßen Bindemittel vorliegenden thermoplastischen Polyurethane weist ein Molekulargewicht von etwa 3000 bis etwa 150.000, beispielsweise etwa 5.000 bis etwa 100.000 oder etwa 8.000 bis etwa 50.000, beispielsweise etwa 13.000 bis etwa 35.000 auf.

Gegebenenfalls können bei der Umsetzung noch weitere, niedermolekulare Verbindungen vorliegen, wie sie bereits oben unter Komponente F erwähnt wurden.

Die Umsetzung kann gegebenenfalls, wie bereits oben erwähnt, in Gegenwart eines Katalysators vorgenommen werden.

Die Mitverwendung eines Löse- oder Verdünnungsmittels ist in der Regel nicht erforderlich. Im Rahmen einer bevorzugten Ausführungsform wird jedoch ein Lösemittel, oder ein Gemisch aus zwei oder mehr Lösemitteln eingesetzt. Geeignete Lösemittel sind beispielsweise die bereits oben genannten, insbesondere Diisopropylether oder Methyl-tert.-butylether oder bevorzugt cyclische Ether, insbesondere Tetrahydrofuran oder Dioxan.

Wenn bei der Herstellung der erfindungsgemäßen thermoplastischen Polyurethane die Verbindung P-A-P im Überschuß, beispielsweise in der doppelten molaren Menge, zur entsprechenden das Hartsegment bildenden Verbindung eingesetzt wird, so entsteht ein thermoplastisches Polyurethan, das als Endgruppen funktionelle Gruppen P trägt. Zur Herstellung von thermoplastischen Polyurethanen, die ein Strukturelement gemäß der allgemeinen Formel I aufweisen, können diese, gegenüber Isocyanatgruppen reaktive Endgruppen enthaltenden Verbindungen mit gegenüber solchen Gruppen difunktionellen Verbindungen unter Kettenverlängerung umgesetzt werden. Entsprechende difunktionelle Verbindungen der allgemeinen Formel G-V-G weisen als funktionelle Gruppen G gegenüber den funktionellen Gruppen P reaktive Gruppen auf. Beispiele für solche funktionelle Gruppen G sind in erster Linie die Isocyanatgruppen, die im Rahmen einer bevorzugten Ausführungsform der vorliegenden Erfindung eingesetzt werden. Je nach Art der funktionellen Gruppe P kann G jedoch auch für andere gegenüber P reaktive funktionelle Gruppen stehen, beispielsweise für Epoxygruppen, Carbonsäuregruppen, Carbonsäureestergruppen, Carbonsäureanhydride oder für Doppelbindungen, die im Rahmen einer Michael-Addition mit P umgesetzt werden können.

In einer bevorzugten Ausführungsform der Erfindung weist V als funktionelle Gruppen G mindestens zwei Epoxy-, OH-, NCO- oder COOH-Gruppen oder ein untereinander nicht reaktives Gemisch aus zwei oder mehr davon auf.

Die erfindungsgemäße Bindemittelzusammensetzung enthält in einer bevorzugten Ausführungsform mindestens ein thermoplastisches Polyurethan. In einer bevorzugten Ausführungsform der vorliegenden Erfindung enthält die erfindungsgemäße Bindemittelzusammensetzung ein solches thermoplastisches Polyurethan, oder ein Gemisch aus zwei oder mehr solcher thermoplastischen Polyurethane in einer Menge von mindestens etwa 10 Gew.-%, beispielsweise mindestens etwa 30, 50, 70 oder 85 Gew.-%.

Im Rahmen einer weiteren bevorzugten Ausführungsform der vorliegenden Erfindung enthält die erfindungsgemäße Bindemittelzusammensetzung neben dem bereits genannten erfindungsgemäßen Polyurethan oder den bereits genannten erfindungsgemäßen thermoplastischen Polyurethanen noch mindestens ein weiteres Bindemittel. Zu den weiteren im Rahmen der erfindungsgemäßen Bindemittelzusammensetzung einsetzbaren Polymeren zählen beispielsweise Polyacrylate, Polyesterpolyurethane, Poly(meth)acrylaturethane, Polymethacrylate, Polyacrylamide, Polymere oder Copolymere aus Vinylmonomeren wie Styrol, Vinylchlorid, Vinylacetat, Vinylpropionat, Bindemittel auf Basis von Vinylformalen, cellulosehaltige Polymere wie Celluloseester, insbesondere Cellulosenitrate, Celluloseacetate, Celluloseacetopropionat oder Celluloseacetobutyrat, Phenoxyharze oder Epoxyharze, wie sie in an sich bekannter Weise erhalten werden können, oder Gemische aus zwei oder mehr davon.

Die erfindungsgemäße Bindemittelzusammensetzung enthält die oben beschriebenen Polyurethane in der Regel in einer Menge von bis zu etwa 100 Gew.-%, bezogen auf die gesamten in der Bindemittelzusammensetzung enthaltenen Polymeren. Weitere Polymere können in einem Anteil von bis zu etwa 80 Gew.-%, beispielsweise bis zu etwa 70, 60, 50, 40 oder 30 Gew.-%, oder darunter, enthalten sein.

In einer weiteren bevorzugten Ausführungsform der Erfindung beträgt der Gehalt des Bindemittels an erfindungsgemäßem Polyurethan etwa 50 ± 10 Gew.-%, wobei der Rest aus herkömmlichen zur Verwendung in Bindemitteln geeigneten Polymeren, beispielsweise Polyurethanen, bestehen kann.

Die erfindungsgemäßen Bindemittelzusammensetzungen können die oben genannten Polyurethane sowohl als Dispergierbindemittel als auch als Auflackbindemittel enthalten. Wenn eine erfindungsgemäße Bindemittelzusammensetzung ein Polyurethan als Dispergierbindemittel enthält, so sollte die Zahl der Ankergruppen pro Weich- oder Hartsegment im Polymeren mindestens etwa 1, insbesondere etwa 1 bis etwa 3 betragen. Wenn eine erfindungsgemäße Bindemittelzusammensetzung ein solches Polyurethan als Auflackbindemittel enthält, so sollte die Zahl der Ankergruppen pro Weich- oder Hartsegment im Polymeren etwa 0,1 bis weniger als 1, insbesondere etwa 0,2 bis etwa 0,6, betragen. Entsprechendes gilt, wenn Gemische aus zwei oder mehr Polyurethanen als Dispergier- oder Auflackbindemittel eingesetzt werden. In einer bevorzugten Ausführungsform der Erfindung sollte das Verhältnis von Hartsegmenten B mit Ankergruppen zu Hartsegmenten B ohne Ankergruppen so eingestellt werden, daß die oben genannten Werte eingehalten werden.

Zum Einsatz als Dispergierbindemittel geeignete Polymere weisen im Rahmen einer bevorzugten Ausführungsform der Erfindung eine Glasübergangstemperatur (T_{g}) von etwa 55 bis etwa 65 °C und ein Molekulargewicht von etwa 10.000 bis etwa 25.000 auf. Zum Einsatz als Auflackbindemittel geeignete Polymere weisen im Rahmen einer bevorzugten Ausführungsform der Erfindung eine Glasübergangstemperatur (T_{g}) von etwa 12 bis etwa 30 °C und ein Molekulargewicht von etwa 40.000 bis etwa 80.000 auf.

Die erfindungsgemäßen Bindemittel enthalten neben den oben beschriebenen Polymeren, oder einem Gemisch aus zwei oder mehr solcher Polymerer, ein magnetisches Pigment, oder ein Gemisch aus zwei oder mehr magnetischen Pigmenten. Als magnetische Pigmente kommen oxidische Pigmente wie γ-Fe₂O₃, γ-Fe₃O₄, CrO₂, Co-modifiziertes FeOₓ (x 0 1,33 - 1,5), metallische Pigmente wie Fe, Co und Ni oder deren Legierungen, Bariumferrit oder Strontiumferrit in Betracht.

Diesen Pigmenten können, wie allgemein üblich, weitere Elemente oder Verbindungen beigemischt sein. In der Regel handelt es sich bei diesen Pigmenten um anisotrope magnetische Pigmente.

Bevorzugt sind beispielsweise nadelförmiges oder spindelförmiges Cobaltmodifiziertes oder unmodifiziertes γ-Fe₂O₃, γ-Fe₃O₄, CrO₂ oder metallische Pigmente wie Fe, Co und Ni oder deren Legierungen. Die Teilchengröße beträgt im allgemeinen 0,04 bis 2 um und das Verhältnis von mittlerer Längsachse zu mittlerer Querachse (Aspektverhältnis) 2 bis 20. Im Rahmen einer bevorzugten Ausführungsform der vorliegenden Erfindung werden magnetische Pigmente eingesetzt, deren Teilchengröße in einem Bereich von 0,07 bis 0,8 µm und deren Aspektverhältnis bei 2 bis 20 liegt. Besonders bevorzugt sind Metallpigmente oder deren Legierungen sowie Gemische, die neben Metallpigmenten noch mindestens ein weiteres Magnetpigment enthalten.

Darüber hinaus können die erfindungsgemäßen Bindemittelzusammensetzungen noch Füllstoffe, Dispergierhilfsmittel, weitere Zusatzstoffe wie Gleitmittel, Ruß oder nichtmagnetische anorganische oder organische Pigmente enthalten.

Als Gleitmittel können beispielsweise Carbonsäuren mit etwa 10 bis etwa 20 C-Atomen, insbesondere Stearinsäure oder Palmitinsäure oder Derivate von Carbonsäuren wie deren Salze, Ester oder Amide, oder Gemische aus zwei oder mehr davon, eingesetzt werden.

Als nichtmagnetische anorganische Pigmente kommen beispielsweise Ruß, Graphit, Metalle, Metalloxide, Metallcarbonate, Metallsulfate, Metallnitride, Metallcarbide und Metallsulfide in Betracht. Beispielsweise genannt werden können TiO₂ (Rutil oder Anatase), TiOₓ Ceroxid, Zinnoxid, Wolframoxid, Antimonoxid, ZnO, ZrO₂ SiO₂, Cr₂O₃, α-Al₂O₃, β-Al₂O₃, γ-Al₂O₃, α-Fe₂O₃, Goethit, Korund, Siliziumnitrid, Titancarbid, Magnesiumoxid, Bornitrid, Molybdänsulfid, Kupferoxid, MgCO₃, CaCO₃, BaCO₃, SrCO₃, BaSO₄, Siliziumcarbid und Titancarbid. Diese Verbindungen können entweder einzeln oder in Kombination miteinander vorliegen und sind in Form und Größe nicht beschränkt. Die Verbindungen müssen nicht in reiner Form vorliegen sondern können mit anderen Verbindungen oberflächenbehandelt sein. Es können auch organische Füllstoffe wie Polyethylen oder Polypropylen eingesetzt werden.

Die erfindungsgemäßen Bindemittelzusammensetzungen lassen sich durch Vermischen der oben genannten Polymeren mit magnetischen oder magnetisierbaren Pigmenten erhalten. Gegenstand der vorliegenden Erfindung ist daher auch ein Verfahren zur Herstellung einer erfindungsgemäßen Bindemittelzusammensetzung, bei dem ein Polyurethan mit einer Struktureinheit gemäß der allgemeinen Formel I 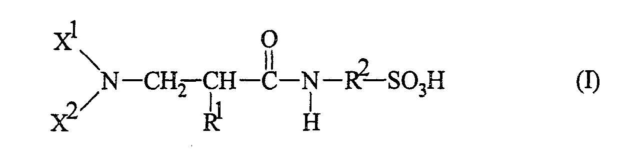 worin R¹ für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R² für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen aromatischen Rest mit 6-18 C-Atomen steht, X¹ und X² jeweils unabhängig voneinander für einen mindestens zwei C-Atome umfassenden, gegebenenfalls substituierten Rest stehen, wobei mindestens einer der Reste X¹ und X² durch Reaktion einer OH-, NH₂,-, NHR³ oder SH-Gruppe in das Polyurethan eingebunden ist, oder ein Salz davon, mit mindestens einem magnetischen oder magnetisierbaren Pigment dispergiert wird.

Zur Herstellung der erfindungsgemäßen Bindemittelzusammensetzungen können daher ein Polyurethan, oder ein Gemisch aus zwei oder mehr der oben genannten Polyurethane mit einem magnetischen Pigment, oder einem Gemisch aus zwei oder mehr magnetischen Pigmenten, beispielsweise in Abmischung mit einem oder mehreren Lösemitteln und gegebenenfalls zusammen mit Füllstoffen, Dispergierhilfsmitteln, weiteren Bindemitteln und weiteren Zusatzstoffen wie Gleitmitteln, Ruß oder nichtmagnetischen anorganischen oder organischen Pigmenten zusammen dispergiert werden. In einer bevorzugten Ausführungsform werden die Hauptkomponenten in der erfindungsgemäßen Bindemittelzusammensetzung, also insbesondere die Pigmente und die polymeren Bindemittel zunächst unter Zusatz von wenig Lösemittel zur einer teigartigen Masse vermengt und anschließend innig miteinander, z. B. durch Kneten, vermischt und erst anschließend dispergiert. So kann anschließend beispielsweise in einer Dispergierapparatur, z. B. einer Topfkugelmühle oder einer Rührwerksmühle, aus dem magnetischen Pigment und den weiteren, angeteigten Inhaltsstoffen der Bindemittelzusammensetzung oder einer Lösung der eingesetzten Bindemittel, vorzugsweise in einem organischen Lösemittel, unter Zusatz von Gleitmittel und eventuell geringen Mengen eines Dispergiermittels, die erfindungsgemäße Bindemittelzusammensetzung hergestellt werden.

Die erfindungsgemäßen Bindemittelzusammensetzungen können im Rahmen ihrer Verwendung zur Herstellung magnetischer Aufzeichnungsmedien beispielsweise auf übliche starre oder flexible Trägermaterialien aufgetragen werden, deren Stärke im allgemeinen etwa 0,5 bis etwa 200 um beträgt. Als Trägermaterialien eignen sich insbesondere Folien aus linearen Polyestern wie Polyethylenterephthalat oder Polyethylennaphthalat, die beispielsweise Stärken von etwa 4 bis etwa 150 um, insbesondere etwa 5 bis etwa 36 um aufweisen.

Gegenstand der Erfindung ist auch ein magnetisches Aufzeichnungsmedium, mindestens enthaltend eine erfindungsgemäße Bindemittelzusammensetzung oder eine nach einem erfindungsgemäßen Verfahren hergestellte Bindemittelzusammensetzung.

Die Herstellung der erfindungsgemäßen magnetischen Aufzeichnungsmedien kann in bekannter Weise erfolgen. Zweckmäßig wird die in einer Dispergierapparatur, zum Beispiel einer Topfkugelmühle oder einer Rührwerksmühle, aus dem magnetischen Pigment und einer Lösung der Bindemittel, vorzugsweise in einen organischen Lösemittel, unter Zusatz von Gleitmittel, eventuell geringen Mengen Dispergiermittel sowie üblichen weiteren Zusatzstoffen hergestellte Bindemittelzusammensetzung, gegebenenfalls nach dem Zumischen eines Vernetzers, filtriert und mit der üblichen Beschichtungsmaschine, z. B. mittels eines Linealgießers oder eines Extruders auf den nichtmagnetischen Träger aufgetragen. Die Beschichtung kann auf einer oder beiden Seiten des Trägers geschehen.

Dabei ist es möglich, die erfindungsgemäße Bindemittelzusammensetzung mehrschichtig aufzutragen, wobei Art und/oder Menge der magnetischen oder magnetisierbaren Pigmente in den einzelnen Schichten gleich oder verschieden sein können. Es ist ebenfalls möglich, direkt auf den Träger eine sogenannte Haftschicht oder eine oder mehrere bindemittelhaltige Schichten aufzutragen, die keine magnetischen oder magnetisierbaren Pigmente enthalten. Es ist ebenfalls ein Schichtaufbau möglich, bei dem sich Schichten, die magnetische oder magnetisierbare enthalten mit Schichten ohne magnetische oder magnetisierbare Pigmente abwechseln. Werden mehrere magnetische und/oder unmagnetische Schichten aufgetragen, kann die Herstellung der magnetischen Aufzeichnungsträgern sowohl nach der bekannten wet-on-dry Methode wie auch nach der bekannten wet-on-wet Methode erfolgen. Dabei sind alle aus dem Stand der Technik als geeignet bekannten Vorrichtungen verwendbar.

In der Regel erfolgt eine magnetische Ausrichtung bevor die flüssige Bindemittelzusammensetzung auf dem Träger getrocknet wird. Letzteres geschieht zweckmäßigerweise in etwa 10 bis etwa 200 s bei Temperaturen von etwa 50 bis etwa 90 °C. Die Magnetschichten können auf üblichen Maschinen mittels Hindurchführen zwischen geheizten und polierten Walzen, gegebenenfalls bei Anwendung von Druck und Temperaturen von etwa 25 bis etwa 100 °C, vorzugsweise 60 bis etwa 90 °C, geglättet und verdichtet werden. Dabei hat es sich bei vernetzenden Bindemitteln als sehr vorteilhaft erwiesen, die Kalandrierung vorzunehmen, bevor die Vernetzung abgeschlossen ist, da die OH-Gruppen tragenden Polymeren im unvernetzten Zustand sehr thermoplastisch sind, ohne hierbei zu verkleben. Die Dicke der Magnetschicht beträgt im allgemeinen etwa 0,1 bis etwa 20 um, vorzugsweise etwa 0,2 bis etwa 8 µm.

Im Falle der Herstellung von Magnetbändern werden die beschichteten Folien in der Längsrichtung und in den üblichen, meist nach Zoll festgelegten Breiten geschnitten oder bei der Herstellung von runden Aufzeichnungsmedien wird die gewünschte Form ausgestanzt.

Ebenfalls Gegenstand der Erfindung ist die Verwendung einer erfindungsgemäßen Bindemittelzusammensetzung oder einer erfindungsgemäß hergestellten Bindemittelzusammensetzung zur Herstellung magnetischer Aufzeichnungsmedien.

Unter magnetischen Aufzeichnungsmedien sind dabei alle bekannten starren oder flexiblen, analogen oder digitalen Aufzeichnungsmedien, z.B. Audio- oder Videobänder, Datenbänder, Floppy-disks, Magnetkarten oder dergleichen zu verstehen.

Ein weiterer Gegenstand der Erfindung ist ein magnetisches Aufzeichnungsmedium, enthaltend eine erfindungsgemäße oder erfindungsgemäß hergestellte Bindemittelzusammensetzung.

Im Rahmen einer bevorzugten Ausführungsform der Erfindung enthält das erfindungsgemäße magnetische Aufzeichnungsmedium als magnetisches oder magnetisierbares Pigment ein ferromagnetisches Metallpigment oder ein ferromagnetisches Metallegierungspigment. Im Rahmen einer weiteren bevorzugten Ausführungsform der Erfindung enthält die Bindemittelzusammensetzung wenigstens ein weiteres magnetisches oder nichtmagnetisches Pigment.

Das erfindungsgemäße magnetische Aufzeichnungsmedium kann beispielsweise als Videoband, Audioband, Datenband, Diskette oder Magnetkarte eingesetzt werden.

Die Erfindung wird nachfolgend durch Beispiele näher erläutert.

### Beispiele:

### Beispiel I

### Herstellung des Michael-Additionsprodukts aus Diisopropanolamin und 2-Acrylamido-2-methylpropansulfonsäure

In einer Rührapparatur wurden 103,5g (0,5 Mol) 2-Acrylamido-2-methylpropansulfonsäure und 0,5 g 4-Methoxyphenol in 100 g Wasser gelöst. Danach wurden 20 g (0,5 Mol) Natriumhydroxyd in 60 g Wasser bei maximal 30 °C zugetropft. Anschließend wurden 59,85 g (0,45 Mol) Diisopropanolamin in 60 g Wasser, zugegeben und auf 120 °C (Außentemperatur) erwärmt. Nach 8 Stunden Reaktionszeit wurde auf Raumtemperatur abgekühlt und mit 49,3 g (0,5 Mol) konzentrierter Salzsäure neutralisiert. Danach wurde das Lösemittel entfernt und der Rückstand in 53 g warmem Ethanol gelöst. Das dabei ausfallende Natriumchlorid wurde abgetrennt. Das Filtrat kristallisierte beim Abkühlen aus.

### Beispiel II

### Herstellung eines Polyurethans aus Isophorondiisocyanat, 2-Butyl-2-ethyl-1,3-Propandiol und dem Michael-Addukt aus Diisopropanolamin und 2-Acrylamido-2-methylpropansulfonsäure

17,0 g (0,0 5 Mol) des Michael-Adduktes aus Beispiel I wurden mit 66,6 g (0,3 mol) Isophorondiisocyanat und 0,5 g Dibutylzinndilaurat in 130 g N-Methylpyrrolidon bei 100 °C unter Rühren zur Reaktion gebracht. Bei einem NCO-Gehalt der Lösung von 9,83%, wurden 48 g (0,3 mol) 2-Butyl-2-ethyl-1,3-propandiol und 0,1 g Dibutylzinndilaurat zugegeben und auf 100 °C bis zum Ende der Reaktion erhitzt. Nach Entfernung des Lösemittels war das Produkt im Tetrahydrofuran, Toluol und Methanol löslich.

### Beispiel III

### Herstellung eines Dispergierbindemittels auf Basis eines Michael-Additionsprodukts

1 Mol des Produkts aus Beispiel II wurden mit 12 mol 2-Butyl-2-ethyl-1,3-propandiol und 14 mol 4,4'-Diphenylenmethan Diisocyanat in 24 kg Tetrahydrofuran bei 60 °C zur Reaktion gebracht. Bei einem NCO-Gehalt der Lösung von 0,26% wurde eine 24,6%-ige Lösung von 2 mol eines OH-endständigen Polyurethans mit einem Molekulargewicht von 4000 bestehend aus einem Polyester (Adipinsäure, Isophthalsäure und Cyclohexandimethanol; Molekulargewicht ca. 800) und MDI, gelöst in Tetrahydrofuran, zugegeben. Die weitere Reaktion erfolgte bei 60 °C. Das resultierende Produkt hatte einen K-Wert (nach Fikentscher) von 31 und eine über DSC bestimmte Glasübergangstemperatur von 75 °C.

### Beispiel IV

In einer Rührwerkskugelmühle mit einem Inhalt von 1,5 1, gefüllt mit 2,7 kg Keramikkugeln mit einem Durchmesser zwischen 1,0 und 1,5 mm, wurden mit
- 4,2 kg eines organischen Lösemittelgemischs bestehend aus 80 % THF und 20 % Isobutylmethylketon,
- 930 g einer Lösung eines erfindungsgemäßen Polymeren, 15% ig in THF,
- 500,4 g einer Lösung eines handelsüblichen Polyurethans mit Sulfonat-Ankergruppen (Firma Morthane), 25 % ig in THF,
- 1200 g eines ferromagnetischen Metallpigments (Hc = 127 kA/m; SSA = 58 m2/g; durchschnittliche Partikelgröße 71 nm, mittlerer Partikeldurchmesser 25 nm);
- 110 g a-Aluminiumoxid (durchschnittlicher Partikeldurchmesser 320 nm);
- 12g Ruß (BET = 60 m2/g; Primärteilchengröße 30 nm)
- 12 g Stearinsäure
- 9 g Fettsäureester
befüllt und 6 Stunden dispergiert. Die so hergestellte Dispersion war homogen, feinteilig, absetzstabil und flokkulatfrei. Danach wurde die Dispersion unter Druck durch ein Filter (Porenweite 3 um) filtriert. Der Dispersion wurden unmittelbar vor dem Beschichten unter starkem Rühren 42 g einer 50 %igen Lösung eines Umsetzungsprodukts von 3 mol 2,4-Toluylendiisocyanat (TDI) mit 1 mol Trimethylolpropan in THF zugesetzt.

Die Dispersion wurde auf eine rückbeschichtete Polyethylenterephthalat-Folie mit einer Trockenschichtdicke von 2 µm aufgetragen. Vor dem Trocknen wurde die beschichtete Bahn zur Ausrichtung der ferromagnetischen Pigmente durch eine Richtstrecke, bestehend aus einer Spule mit einer Feldstärke von 200 kA/m hindurchgeführt. Nach dem Trocknen bei 80 °C wurde die Folienbahn in einem Stahl/Stahlkalander mit 6 Spalten bei 85 °C und einem Druck von 200 kg/cm satiniert und anschließend in 1/2 Zoll breite Videobänder geschnitten.

### Vergleichsbeispiel:

Es wurde wie oben beschriebenen Verfahren, jedoch wurde das erfindungsgemäße Polyurethan gewichtsmäßig durch ein handelsübliches VC-Copolymer mit Sulfonat-Ankergruppen (Firma Nippon Zeon) ersetzt.

Die erhaltenen Meßergebnisse zeigt Tab. 1:

**Tab. 1**

| | Beispiel | Vergleichsbeispiel |
|---|---|---|
| Dauer der Dispergierung [h] | 9 | 11 |
| Glanz 1 | 123 | 110 |
| Glanz 2 | 122 | 105 |
| Oberflächenfehler | Keine | Keine |
| HF-Pegel (dB) | + 1,0 | 0 |
| S/N (dB) | + 0,6 | -0,4 |
| Abrieb am Videokopf | 2,5 | 4,0 |
| Reibungskoeffizient (RAF-Test) | 0,20 | 0,25 |

Die Meßwerte in Tabelle 1 bedeuten:

### Glanzmessung:

Es wurde eine Reflexion im Winkel von 60° an der unkalandrierten Schicht gemessen.
Glanz 1: Glanzwert unmittelbar nach Trocknung der aufgetragenen Schicht.
Glanz 2: Glanzwert nach 24 h Rollbrett.

Die Pigmentaufteilung ist um so besser, je höher der Glanzwert liegt.

### HF-Pegel:

Der Hochfrequenz-Pegel wurde in einem Betacam SP-Rekorder (System BVW 75, Fa. Sony) gegen das Referenzband Sony RSB 01 SP gemessen. Das Band ist um so besser, je höher der HF-Pegel ist.

### S/N (Luminanz):

Das Luminanz-Signal wurde in einem Betacam SP-Rekorder (System BVW 75, Fa. Sony) gegen das Referenzband Sony RSB 01 SP gemessen. Das Band ist um so besser, je höher der S/N-Wert ist.

### Reibungskoeffizient:

Der Reibungskoeffizient mit RAF-Test wurde bei einer Probenlänge von 150 mm bei einer Meßstrecke von 100 mm bestimmt. Nach 15 min. Klimatisierung bei 40 °C und 80% relativer Luftfeuchte wurde das Bandstück auf eine Länge von 100 mm mit einer Kraft von 2 N und einer Geschwindigkeit von 20 mm/s über einen Stahlstift (Durchmesser 2,5 mm. Umschlingung 90°) hin- und hergezogen. Gemessen wurde der Reibungskoeffizient nach 100 Zyklen im o.g. Klima. Das Band ist in seinen Laufeigenschaften um so besser, je kleiner der Wert ist.

## Patentansprüche

1. Bindemittelzusammensetzung, enthaltend ein Polyurethan mit einer Struktureinheit gemäß der allgemeinen Formel I 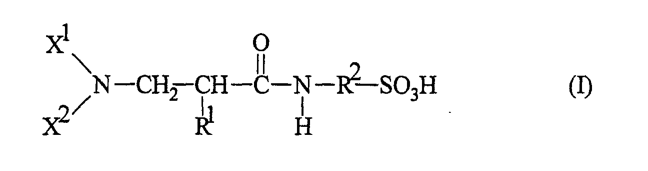 worin R¹ für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R² für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoff mit 6 bis 18 C-Atomen steht, X¹ und X² jeweils unabhängig voneinander für einen mindestens zwei C-Atome umfassenden, gegebenenfalls substituierten Rest stehen, wobei mindestens einer der Reste X¹ und X² durch Reaktion einer OH-, NH₂,-, NHR³ oder SH-Gruppe, worin R³ für einen linearen oder verzweigten, gesättigten oder ungesättigten, gegebenenfalls aromatisch substituierten Alkylrest mit 1 bis 44 C-Atomen steht, in das Polyurethan eingebunden ist, oder ein Salz davon, und mindestens ein magnetisches oder magnetisierbares Pigment.

2. Bindemittelzusammensetzung nach Anspruch 1, dadurch gekennzeichnet, daß die beiden Reste X¹ und X² unabhängig voneinander für R³-Q-, R³-Q-(Y-O-)ₘ Y-Q- oder R³-O-T-Q- stehen, wobei Q für O, NH, NR³ oder S, R³ für einen linearen oder verzweigten, gesättigten oder ungesättigten, gegebenenfalls aromatisch substituierten Alkylrest mit 1 bis 44 C-Atomen, Y für einen linearen oder verzweigten, gegebenenfalls aromatisch substituierten Alkylrest mit 2 bis 10 C-Atomen, T für ein durch Polymerisation, Polyaddition oder Polykondensation erhältliches Polymeres mit einem Molekulargewicht M_{w} von 150 bis 5000 und m für einen Wert von 1 bis 300 steht und R² die in Anspruch 1 genannte Bedeutung aufweist.

3. Bindemittelzusammensetzung nach Anspruch 1 oder 2, dadurch gekennzeichnet, daß Y für CH₂-CH₂ oder CH(CH₃)-CH₂ oder CH₂-CH(CH₃) oder eine statistische oder blockweise Abfolge dieser Reste steht.

4. Bindemittelzusammensetzung nach einem der Ansprüche 1 bis 3, dadurch gekennzeichnet, daß R² für einen linearen oder verzweigten, gesättigten Alkylrest mit 2 bis 6 C-Atomen steht.

5. Bindemittelzusammensetzung nach einem der Ansprüche 1 bis 4, dadurch gekennzeichnet, daß das Polyurethan durch Umsetzung von
A: einem Polyol mit mindestens etwa 2 OH-Gruppen und einem Molekulargewicht von etwa 500 bis etwa 10.000, oder einem Gemisch aus zwei oder mehr davon, und
B: einem linearen aliphatischen Diol mit einem Molekulargewicht von weniger als 500, oder einem Gemisch aus zwei oder mehr davon, und
C: einem Polyisocyanat mit 6 bis etwa 30 C-Atomen, oder einem Gemisch aus zwei oder mehr davon, und
D: einer Verbindung gemäß der allgemeinen Formel II 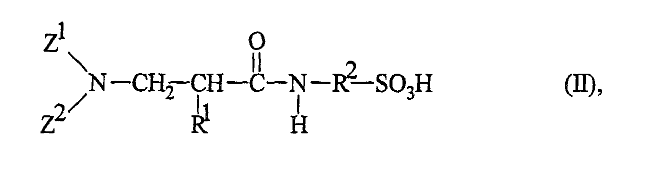 oder einem Salz davon, worin R¹ und R² die in Anspruch 1 genannte Bedeutung aufweisen und Z¹ und Z² jeweils unabhängig voneinander für einen mindestens zwei C-Atome umfassenden, gegebenenfalls substituierten Rest stehen, wobei mindestens einer der Reste Z¹ und Z² eine OH-, NH₂-, NHR³ oder SH-Gruppe aufweist, worin R³ die in Anspruch 2 genannte Bedeutung aufweist, und gegebenenfalls einer weiteren Verbindung mit mindestens einer ionischen oder ionisierbaren Gruppe und mindestens etwa zwei gegenüber Isocyanaten reaktionsfähige Gruppen, oder einem Gemisch aus zwei oder mehr davon, und gegebenenfalls
E: einem Polyol mit mindestens etwa 3 OH-Gruppen und 3 bis etwa 10 C-Atomen, oder einem Gemisch aus zwei oder mehr davon, und gegebenenfalls
F: einem Aminoalkohol mit 2 bis etwa 16 C-Atomen, oder einem Gemisch aus zwei oder mehr davon, oder gegebenenfalls einer gegenüber Isocyanaten mindestens difunktionellen Aminoverbindung, oder einem Gemisch aus zwei oder mehr davon, oder einem Gemisch aus zwei oder mehr davon,
hergestellt wurde.

6. Bindemittelzusammensetzung nach einem der Ansprüche 1 bis 5, dadurch gekennzeichnet, daß sie mindestens ein thermoplastisches Polyurethan enthält.

7. Verfahren zur Herstellung einer Bindemittelzusammensetzung nach einem der Ansprüche 1 bis 6, bei dem ein Polyurethan mit einer Struktureinheit gemäß der allgemeinen Formel I 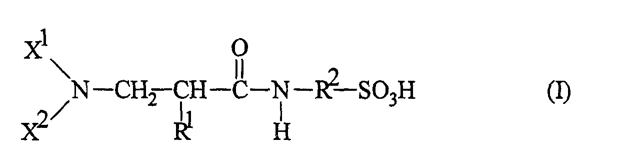 worin R¹ für H oder einen linearen oder verzweigten, gesättigten oder ungesättigten aliphatischen Kohlenwasserstoffrest mit 1 bis 20 C-Atomen, einen gesättigten oder ungesättigten, gegebenenfalls substituierten cycloaliphatischen Kohlenwasserstoffrest mit 4 bis 20 C-Atomen oder einen gegebenenfalls substituierten araliphatischen Kohlenwasserstoffrest mit 6 bis 40 C-Atomen steht, R² für einen linearen oder verzweigten, gesättigten oder ungesättigten aliphatischen Kohlenwasserstoffrest mit 1 bis 20 C-Atomen oder einen cycloaliphatischen Kohlenwasserstoffrest mit 4 bis 20 C-Atomen oder einen gegebenenfalls substituierten aromatischen Kohlenwasserstoffrest mit 6 bis 18 C-Atomen steht, X¹ und X² jeweils unabhängig voneinander für einen mindestens zwei C-Atome umfassenden, gegebenenfalls substituierten Rest stehen, wobei mindestens einer der Reste X¹ und X² durch Reaktion einer OH-, NH₂,-, NHR³ oder SH-Gruppe, worin R³ für einen linearen oder verzweigten, gesättigten oder ungesättigten, gegebenenfalls aromatisch substituierten Alkylrest mit 1 bis 44 C-Atomen steht, in das Polyurethan eingebunden ist, oder ein Salz davon, mit mindestens einem magnetischen oder magnetisierbaren Pigment vermischt wird.

8. Verwendung einer Bindemittelzusammensetzung nach einem der Ansprüche 1 bis 6 oder einer gemäß Anspruch 7 hergestellten Bindemittelzusammensetzung zur Herstellung magnetischer Aufzeichnungsmedien.

9. Magnetisches Aufzeichnungsmedium, enthaltend eine Bindemittelzusammensetzung gemäß Anspruch 1 bis 6 oder hergestellt gemäß Anspruch 7.

10. Magnetisches Aufzeichnungsmedium nach Anspruch 9, wobei das magnetische oder magnetisierbare Pigment ein ferromagnetisches Metallpigment oder ein ferromagnetisches Metallegierungspigment ist.

11. Magnetisches Aufzeichnungsmedium nach einem der Ansprüche 9 oder 10, wobei die Bindemittelzusammensetzung wenigstens ein weiteres magnetisches oder nichtmagnetisches Pigment enthält.

12. Magnetisches Aufzeichnungsmedium nach einem der Ansprüche 9 bis 11, dadurch gekennzeichnet, daß es ein Videoband, ein Audioband, ein Datenband, eine Diskette, oder eine Magnetkarte ist.
